(19) Europäisches Patentamt
European Patent Office
Office européen des brevets

(11) EP 1 202 623 B1

# (12) EUROPEAN PATENT SPECIFICATION

(45) Date of publication and mention of the grant of the patent:
**22.09.2004 Bulletin 2004/39**

(21) Application number: **00925888.0**

(22) Date of filing: **03.04.2000**

(51) Int Cl.[7]: **A01N 25/30**, A01N 57/20
// (A01N57/20, 57:20, 43:653, 41:06, 39:04, 37:48, 33:22, 25:30), A01N25:00

(86) International application number:
**PCT/US2000/008763**

(87) International publication number:
**WO 2000/064256 (02.11.2000 Gazette 2000/44)**

(54) **ENHANCED HERBICIDE COMPOSITIONS**

VERBESSERTE HERBIZIDZUSAMMENSETZUNEN

COMPOSITIONS HERBICIDES AMELIOREES

(84) Designated Contracting States:
**AT BE CH CY DE DK ES FI FR GB GR IE IT LI LU MC NL PT SE**

(30) Priority: **23.04.1999 US 130756 P**

(43) Date of publication of application:
**08.05.2002 Bulletin 2002/19**

(73) Proprietor: **Monsanto Technology LLC**
**St. Louis, Missouri 63167 (US)**

(72) Inventors:
- **BRINKER, Ronald, J.**
  **Ellisville, MO 63021 (US)**
- **DYSZLEWSKI, Andrew, D.**
  **Maryland Heights, MO 63043 (US)**
- **JONES, Claude, R.**
  **St. Louis, MO 63146 (US)**
- **KRAMER, Richard, M.**
  **Chesterfield, MO 63017 (US)**
- **PALLAS, Norman, R.**
  **Florissant, MO 63034 (US)**
- **RADKE, Rodney, O.**
  **St. Charles, MO 63303 (US)**
- **WARD, Anthony, J., I.**
  **Frontenac, MO 63131 (US)**
- **GILLESPIE, Jane, L.**
  **St. Louis, MO 63130 (US)**
- **XU, Xiaodong, C.**
  **St. Louis, MO 63146 (US)**

(74) Representative: **Bosch, Henry**
**Monsanto Services International SA**
**Avenue de Tervuren 270-272**
**1150 Bruxelles (BE)**

(56) References cited:
**EP-A- 0 143 547**
**EP-A- 0 585 210**
**EP-A- 0 617 894**
**WO-A-98/17108**
**WO-A-98/17109**
**GB-A- 2 267 825**

- **DATABASE WPI Section Ch, Week 199817 Derwent Publications Ltd., London, GB; Class C03, AN 1998-189103 XP002145747 & JP 10 045516 A (NISSAN CHEM IND LTD), 17 February 1998 (1998-02-17)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 202 623 B1

## Description

FIELD OF THE INVENTION

The field of the present invention is that of exogenous chemical substances applied to foliage of plants, and more particularly that of enhancing biological effectiveness of compositions of such exogenous chemical substances.

The term "exogenous chemical substance" as used herein means a chemical substance, whether naturally or synthetically obtained, which is applied to a plant to result in expressing a desired biological activity. The term "biological activity" as used herein means elicitation of a stimulatory, inhibitory, regulatory, therapeutic, toxic or lethal response in the plant or in a pathogen, parasite or feeding organism present in or on the plant. Examples of exogenous chemical substances include, but are not limited to, chemical pesticides (such as herbicides, algicides, fungicides, bactericides, viricides, insecticides, miticides, nematicides and molluscicides), plant growth regulators, fertilizers and nutrients, gametocides, defoliants, desiccants, mixtures thereof and the like.

The term "biological effectiveness" is used herein to denote the degree to which a desired biological activity is expressed upon application of an exogenous chemical substance to foliage of a plant, or alternatively to denote the dosage or rate of application of the exogenous chemical substance that results in the desired biological activity being expressed to a given degree. For example, where the exogenous chemical substance is a herbicide, biological effectiveness can be measured by the degree of inhibition of plant growth resulting from application of a particular rate of the herbicide, or by the application rate of the herbicide required to cause a particular degree of inhibition, *e.g.*, 50% or 85% inhibition. Thus increased or enhanced biological effectiveness of a herbicide can be exhibited for example as an increased level of plant growth inhibition at a given rate of the herbicide, or as a reduction in the minimum rate of the herbicide giving a certain threshold level of plant growth inhibition.

BACKGROUND OF THE INVENTION

For many purposes in agriculture and related endeavors it is desired to treat plants with exogenous chemical substances of various kinds. Many exogenous chemical substances are applied to foliage (*i.e.*, leaves and other non-woody above-ground parts) of a plant, and have a site of action in the plant either close to or remote from the locus of application. Such substances are referred to herein as foliar-applied exogenous chemical substances.

Typically, when an exogenous chemical substance is applied to foliage by plant treatment processes known in the art, only a small portion of the amount applied reaches sites of action in the plant where a desired biological activity of the exogenous chemical substance can be usefully expressed. It is therefore a major desideratum in agriculture and related endeavors to enhance the efficiency of delivery of foliar-applied exogenous chemical substances to their sites of action in plants. and thereby to enhance the biological effectiveness of the exogenous chemical substance for the purpose for which the exogenous chemical substance is used.

Application to foliage of an exogenous chemical substance by processes known in the art does not universally result in inefficient delivery to sites of action. In some situations such processes provide excellent biological effectiveness, even at a low use rate of the exogenous chemical substance. In other situations the same processes, using the same rate of the same exogenous chemical substance, provide inadequate biological effectiveness. Thus, these processes are inconsistent in the result they provide, or they cannot be relied upon to provide the desired result.

A problem is that it is seldom possible to identify in advance those situations where good biological effectiveness will be obtained partly because so many factors influence efficiency of delivery. These factors include weather (temperature, relative humidity, daylength, cloudiness precipitation, wind *etc.*) preceding, during and following application soil conditions (fertility, aeration, *etc.*), plant growth stage health and physiological status equipment-related inaccuracies in application, and other factors. Therefore, to help ensure reliable or consistent biological effectiveness of a foliar-applied exogenous chemical substance the user typically applies the substance at a higher rate than is truly necessary in the majority of situations.

Variability in biological effectiveness in field conditions is an especially troublesome problem in the case of exogenous chemical substances that are acids. and are typically formulated as water-soluble salts in which the exogenous chemical substance is present in an anionic form. Sometimes by converting such acid substances to esters, this variability can be moderated: however, in many cases esters show reduced biological effectiveness, for example due to inadequate conversion back to the parent acid once inside the treated plant. There remains a strong need for enhanced biological effectiveness. and enhanced reliability of biological effectiveness, of foliar-applied exogenous chemical substances, particularly anionic exogenous chemical substances.

The term "anionic exogenous chemical substance" as used herein means an exogenous chemical substance whose molecular structure includes one or more acid, or proton-donating, sites. and is therefore capable of forming an anion in the presence of a proton acceptor. The term therefore embraces substances that arc zwitterionic. In describing an exogenous chemical substance as "anionic" herein, it is not implied that the exogenous chemical substance

is necessarily in anionic form or that it is dissociated.

Benefits of a process providing greater reliability of biological effectiveness include an ability to reduce rates of application of exogenous chemical substances without sacrificing consistency of biological effectiveness. Pressures felt by the agricultural industry to reduce pesticide, particularly herbicide, usage are well evidenced by symposia on the subject, such as that held in 1993 by the Weed Science Society of America and documented in *Weed Technology* **8**, 331-386 (1994). Reduced use rates bring rewards not only environmentally but also economically, as the cost per unit area treated decreases.

Foliar-applied exogenous chemical substances have frequently been applied together with amphiphilic materials, particularly amphiphilic surface-active agents, otherwise known as surfactants. Surfactants can influence biological effectiveness of a foliar-applied exogenous chemical substance in numerous ways.

When a dilute aqueous composition of an exogenous chemical substance is applied to foliage by conventional hydraulic spraying, the presence of surfactant in the dilute aqueous composition can alter the size distribution of the spray droplets, typically increasing the percentage of spray, volume in the form of small droplets and reducing the percentage of spray volume in the form of large droplets. As smaller droplets have lower momentum than larger droplets, these smaller droplets are less likely to rebound from a foliar surface and consequently are more likely to be retained on that surface. Spray retention can also be facilitated by adhesion of surfactant molecules in a spray droplet to the foliar surface, which in most plants is waxy and hydrophobic. This adhesion reduces not only rebound but also run-off of spray droplets from the foliar surface. Surfactants also tend to increase the area of contact between a spray droplet and a foliar surface, and in many cases enhance penetration of an exogenous chemical substance from the droplet into and through cuticles of leaves to reach internal leaf tissues.

Through these and perhaps other effects, amphiphilic materials including surfactants have long been known to increase the biological effectiveness of exogenous chemical substances. It is therefore commonplace for one or more surfactants to be included in commercial formulations of foliar-applied exogenous chemical substances, even in formulations that do not require the presence of surfactants for acceptable physical stability or handling properties. for example as emulsifying or suspending agents or dispersants.

One of the most extensively studied of foliar-applied anionic exogenous chemical substances, from the point of view of the role of surfactants in enhancing biological effectiveness, is the herbicide glyphosate. As well as being a phytotoxic agent, glyphosate has been used as a plant growth regulator.

Glyphosate (N-phosphonomethylglycine) in its strict sense is an acid compound. but the word "glyphosate" is herein used in a less restrictive sense, except where the context dictates otherwise, to encompass not only glyphosate acid but also salts, adducts and esters thereof, and compounds which are converted to glyphosate in plant tissues or which otherwise provide glyphosate ions. In most commercial formulations of glyphosate, the glyphosate is present as a water-soluble salt. In this respect, glyphosate is typical of most exogenous chemical substances that are acids or that form anions.

Herbicidal salts of glyphosate are disclosed, for example, in U.S. Patent No. 3.799.758 to Franz. U.S. Patent No. 3,853,530 to Franz. U.S. Patent No. 4.140.513 to Prill. U.S. Patent No. 4,315,765 to Large, U.S. Patent No. 4,405,531 to Franz, U.S. Patent No. 4,481,026 to Prisbylla and U.S. Patent No. 4,507,250 to Bakel. Typical of such salts are alkali metal, for example sodium and potassium, salts; ammonium salt; and numerous salts having an ammonium, sulfonium or sulfoxonium cation substituted with 1-3 organic groups containing in total 1-6 carbon atoms, for example dimethylammonium, isopropylammonium, ethanolammonium and trimethylsulfonium salts.

Commercial formulations of glyphosate salts include, for example, Roundup®, Accord®, Roundup® Ultra and Roundup® Xtra herbicides of Monsanto Company, which contain the isopropylammonium salt. Roundup® Dry and Rival® herbicides of Monsanto Company, which contain the ammonium salt. Roundup® Geoforce herbicide of Monsanto Company, which contains the sodium salt, and Touchdown® herbicide of Zeneca, which contains the trimethylsulfonium salt.

Glyphosate as a herbicide has many advantages. particularly environmental advantages including biodegradability and low ecotoxicity. However, studies have shown that even the most biologically effective formulations of glyphosate presently in use do not deliver glyphosate efficiently to sites in the plant where the glyphosate exerts its phytotoxic effect. Typically, only a small fraction of the applied herbicide arrives at such sites.

The small fraction of applied glyphosate which reaches sites of phytotoxic action is related to the fact that the glyphosate must go through several barriers. Among these, one of the most important is believed to be the lipophilic cuticle on the foliar surface to which the glyphosate is applied. It has therefore been theorized that it would be desirable to place the glyphosate into an amphiphilic medium which would provide greater compatibility between the lipophilic cuticle and the hydrophilic glyphosate, and thereby facilitate penetration of glyphosate into and through the cuticle. Similar thinking has been applied to other exogenous chemical substances. particularly those typically formulated as water-soluble salts.

That the concept of an amphiphilic medium as an aid to cuticular penetration and thereby enhanced biological effectiveness, for example of glyphosate, has validity is demonstrated by many studies in which foliar uptake or effectiveness has been enhanced by surfactants. An extensive study by Wyrill & Bumside, *Weed Science* **25,**275-287, 1977 led to a conclusion that "an effective surfactant is a critical component of any glyphosate spray mixture", but noted great variation among surfactant types in the degree of enhancement of herbicidal effectiveness afforded. The authors cautioned that "effectiveness of surfactant combinations was quite variable and difficult to predict" and that "the indiscriminate addition of surfactants or wetting agents to glyphosate spray mixtures which already contain a surfactant should be avoided". The Wyrill & Burnside study generally involved application of surfactants at very high rates relative to the rates of glyphesate applied. Under these conditions, and on the particular plant species they studied, the authors found that in general, cationic surfactants gave greater enhancement of the herbicidal effectiveness of glyphosate than did nonionic surfactants. It is well accepted by those of skill in the art that relative effectiveness of surfactants in enhancing biological activity of an exogenous chemical substance, particularly glyphosate, at high surfactant levels does not permit reliable prediction of relative effectiveness at much lower surfactant levels, as in the realm of the present invention.

Data are reported in International Publication No. WO 98/06259 for a wide variety of cationic, nonionic, anionic and amphoteric surfactants applied either in mixture with, or in sequence following, a glyphosate composition.

The term "alkyl", as used herein in relation to hydrophobic moieties of surfactants, has the broad meaning, as conventionally applied in surfactant art, of aliphatic hydrocarbyl, embracing unsaturated groups, for example alkenyl and alkynyl groups. as well as saturated alkyl groups, unless the context demands otherwise.

Surfactants having a hydrophilic moiety comprising one or more protonatable amino groups or cationic ammonium groups together with a total of 1 to about 100 oxyethylene units in one or more oxyethylene chains constitute a favored selection of surfactants useful in formulating glyphosate and other anionic exogenous chemical substances. For example, commercial glyphosate herbicide products marketed under the trademark Roundup® have been formulated with surfactant compositions based on polyoxyethylene $C_{8-22}$ alkylamines. For example, the surfactant composition MON 0818 of Monsanto Company, which has been extensively used in the formulation of Roundup® herbicide, contains a polyoxyethylene tallowamine having an average of about 15 oxyethylene units per molecule.

Numerous patents disclose compositions comprising glyphosate and an oxyethylene or polyoxyethylene amine or ammonium surfactant.

U.S. Patent No. 5,668,085 to Forbes *et al*. discloses compositions comprising glyphosate and a polyoxyethylene $C_{8-22}$ alkylamine surfactant having an average of up to about 12 oxyethylene units per molecule. Australian Patent Application No. 57565/90 discloses compositions comprising glyphosate and a polyoxyethylene $C_{8-22}$ alkyldiaminopropane surfactant. U.S. Patent No. 5,317,003 to Kassebaum & Berk discloses compositions comprising glyphosate and a quaternary polyoxyethylene $C_{6-14}$ alkylmethylammonium surfactant having about 5 to about 50 oxyethylene units per molecule. U.S. patent No. 5,652,197 to Claude *et al.* discloses compositions comprising glyphosate and a quaternary polyoxypropylene oxyethylene tri-($C_{1-3}$ alkyl)ammonium surfactant having 2 to 20 oxypropylene units per molecule. U.S. Patent No. 5,118,444 to Nguyen discloses compositions comprising glyphosate and a polyoxyethylene $C_{6-20}$ alkylamine oxide surfactant having about 5 to about 25 oxyethylene units per molecule. U.S. Patent No. 5,750,468 to Wright discloses compositions comprising glyphosate and a polyoxyethylene tertiary alkyletheramine, polyoxyethylene quaternary alkyletherammonium or polyoxyethylene alkyletheramine oxide surfactant. French Patent Application No. 2 648 316 discloses compositions comprising glyphosate and a polyoxyethylene N-alkyl-1,3-diaminopropane surfactant.

Polyoxyethylene $C_{16-22}$ alkylether surfactants have been less frequently disclosed in compositions with glyphosate, and generally at surfactant to glyphosate weight ratios outside the realm of the present invention. For example, European Patent No. 0 206 537 discloses solid compositions comprising glyphosate and Plurafac™ A-39 surfactant of BASF, which is a polyoxyethylene $C_{16-18}$ alkylether surfactant having an average of about 55 oxyethylene units per molecule. The lowest weight ratio of Plurafac™ A-39 to glyphosate acid equivalent disclosed therein can be calculated as about 1.16:1 (composition 12 of Table IV of the cited patent).

Wyrill & Burnside, *op. cit*., disclose plant treatment compositions comprising glyphosate and a 1:1 mixture of a polyoxyethylene alkylether surfactant identified as Plurafac™ A-46 with polyoxyethylene alkylamine surfactants Ethomeen™ T/15 ofAkzo and MON 0818 of Monsanto, at surfactant to glyphosate ratios far outside the realm of the present invention. Probably because the surfactant concentration in the compositions was so high (1% weight/volume), no significant benefit was evident for the mixtures over the alkylamine surfactants alone.

At lower surfactant to glyphosate weight ratios, strong enhancement of glyphosate herbicidal effectiveness has been reported for mixtures of a polyoxyethylene alkylamine or alkylammonium surfactant and a polyoxyethylene alkylether surfactant, where the alkylether is derived from a secondary alcohol, as in International Publication No. WO 95/16351, a Guerbet alcohol, as in U.S. Patent No. 5,663,117 to Warner, or an acetylenic diol, as in U.S. Patent No. 5,639,711 to Kassebaum *et al*. European Patent Application No. 0 582 561 discloses a solid granular glyphosate composition containing a polyoxyethylene quaternary alkylammonium surfactant (Ethoquad™ 18/25 of Akzo) and a polyoxyethylene $C_{13}$ alkylether surfactant (Trycol™ 5943 of Henkel) but does not report herbicidal effectiveness of this composition.

Townson, in her Ph.D. thesis, *Influence of formulation and application variables in relation to the performance of glyphosate and imazapyr for control of Imperata cylindrica (L.) Raeuschel*. University of Bristol, U.K., 312 pp., 1990, compared polyoxyethylene $C_{16-18}$ alkylethers having respectively 3, 12 and 19 oxyethylene units for enhancement of foliar retention, uptake, translocation and herbicidal effectiveness of glyphosate and imazapyr. Comparison was also made with polyoxyethylene alkylethers having shorter alkyl chain lengths ($C_{9-11}$, $C_{12-15}$ and $C_{13-15}$). The study further included polyoxyethylene alkylamine surfactants but no blends of alkylether and amine surfactants were tested.
GB-2 267 825 discloses herbicidal glyphosate compositions that comprise rather high amounts of surfactant and show total surfactant-to-glyphosate ratios greater than 0.5. Also, in the case of alkylethers, the alkyl chain length is below 16 c-atoms and the ethoxylation degree is reduced.
It is an objective of the present invention to provide a new method of enhancing the biological effectiveness of an exogenous chemical substance, in particular an anionic exogenous chemical substance, applied to foliage of a plant.
Another object of the invention is to provide a useful alternative to existing methods for enhancing biological effectiveness of anionic exogenous chemical substances.

SUMMARY OF THE INVENTION

In one embodiment of the present invention, a concentrate herbicidal composition is provided comprising

(a) about 10% to about 90% by weight, expressed as acid equivalent, of a first herbicide that is anionic;
(b) a second herbicide in an amount effective to elicit a visible symptom of phytotoxicity in a plant within about 4 days after application to foliage of the plant;
(c) an alkylether surfactant component consisting of one or more surfactants each having the formula (I)

$$R^{12}\text{-O-}(CH_2CH_2O)_n((CHR)_2O)_m\text{-}R^{13} \qquad (I)$$

wherein $R^{12}$ is a linear aliphatic saturated or unsaturated hydrocarbyl group having about 16 to about 22 carbon atoms, n is an average number of about 10 to about 100, m is an average number of 0 to about 5, one R in each $-((CHR)_2O)-$ group is hydrogen and the other R is methyl, and $R^{13}$ is a hydrogen, $C_{1-4}$ alkyl or $C_{2-4}$ acyl group; and
(d) an amine surfactant component consisting of one or more surfactants each having a molecular structure that comprises

(1) a hydrophobic moiety having one or a plurality of independently saturated or unsaturated, branched or unbranched, aliphatic, alicyclic or aromatic $C_{3-20}$ hydrocarbyl or hydrocarbylene groups joined together by 0 to about 7 ether linkages and having in total about 8 to about 24 carbon atoms, and
(2) a hydrophilic moiety comprising an amino group that is cationic or that can be protonated to become cationic, having attached directly thereto 1 to 3 oxyethylene groups or polyoxyethylene chains, these oxyethylene groups and polyoxyethylene chains comprising on average 1 to about 50 oxyethylene units per surfactant molecule, the hydrophobic moiety being attached either to the amino group or via an ether linkage to an oxyethylene unit;

wherein the weight ratio of the alkylether surfactant component to the amine surfactant component is about 1:10 to about 10:1; and wherein the alkylether and amine surfactant components are present in total in an adjuvant amount of about 0.05 to about 0.5 parts by weight per part by weight of the first herbicide, expressed as acid equivalent.
In another embodiment of this invention, a plant treatment composition is provided comprising

(a) water, having dissolved or dispersed therein
(b) a first herbicide that is anionic, in a herbicidally effective amount;
(c) a second herbicide in an amount effective to elicit a visible symptom of phytotoxicity in a plant within about 4 days after application to foliage of the plant;
(d) an alkylether surfactant component consisting of one or more surfactants each having the formula (I)

$$R^{12}\text{-O-}(CH_2CH_2O)_n((CHR)_2O)_m\text{-}R^{13} \qquad (I)$$

wherein $R^{12}$ is a linear aliphatic saturated or unsaturated hydrocarbyl group having about 16 to about 22 carbon

atoms, n is an average number of about 10 to about 100, m is an average number of 0 to about 5, one R in each $-((CHR)_2O)-$ group is hydrogen and the other R is methyl, and $R^{13}$ is a hydrogen, $C_{1-4}$ alkyl or $C_{2-4}$ acyl group; and
(e) an amine surfactant component consisting of one or more surfactants each having a molecular structure that comprises

(1) a hydrophobic moiety having one or a plurality of independently saturated or unsaturated, branched or unbranched, aliphatic, alicyclic or aromatic $C_{3-20}$ hydrocarbyl or hydrocarbylene groups joined together by 0 to about 7 ether linkages and having in total about 8 to about 24 carbon atoms, and
(2) a hydrophilic moiety comprising an amino group that is cationic or that can be protonated to become cationic, having attached directly thereto 1 to 3 oxyethylene groups or polyoxyethylene chains, these oxyethylene groups and polyoxyethylene chains comprising on average 1 to about 50 oxyethylene units per surfactant molecule, the hydrophobic moiety being attached either to the amino group or via an ether linkage to an oxyethylene unit;

wherein the weight ratio of the alkylether surfactant component to the amine surfactant component is about 1:10 to about 10:1; and wherein the alkylether and amine surfactant components are present in total in an adjuvant amount of about 0.05 to about 0.5 parts by weight per part by weight of the first herbicide, expressed as acid equivalent.

The present invention further provides a method for killing or controlling growth of a plant, comprising applying a plant treatment composition as described above to foliage of the plant.

A surprisingly low level of antagonism, or even total absence of antagonism. of the herbicidal effectiveness of the first herbicide by the presence of the second herbicide has been observed.

Amine surfactants useful in the present invention preferably have a chemical structure that, when present in an aqueous medium having a pH of about 4, can be individually represented by the formula (II)

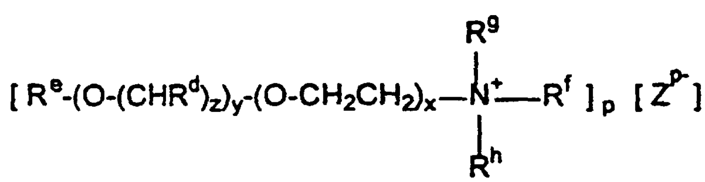

(II)

where $R^c$ is hydrogen or a linear or branched $C_{8-20}$ aliphatic hydrocarbyl group; each z is independently 2 or 3; each $R^d$ is hydrogen or methyl whereby if z is 2 at least one $R^d$ in the two-$(CHR^d)$- groups is methyl; y is 0 to 7 such that the total number of carbon atoms in the group $R^e$-$(O-(CHR^d)_z)_y$- is 8 to 24; x is 0 to 5; $R^f$ is hydrogen, $C_{1-4}$ alkyl or benzyl; $R^g$ is $C_{1-4}$ alkyl or - $(CH_2CH_2-O)_{x'}R^c$ and $R^h$ is $C_{1-4}$ alkyl or $-(CH_2CH_2-O)_{x''}R^c$, where $R^c$ is hydrogen, $C_{1-4}$ alkyl or $C_{2-4}$ acyl and x' and x" are average numbers such that x + x' + x" (the total number of oxyethylene units in a molecule of the amine surfactant) is 1 to about 50: $Z^{p-}$ is a suitable anion; and p is 1 or 2; or by the formula (III)

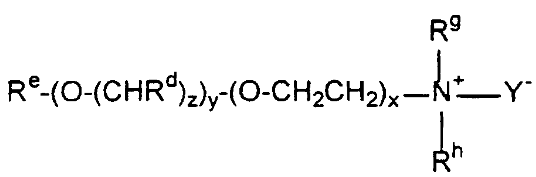

(III)

where $R^d$, $R^e$, $R^g$, $R^h$, x, y and z are as defined immediately above and $Y^-$ is an anionic group selected from $-O^-$, $-(CHR^b)_w-COO^-$ and $-(CHR^b)_w-SO_3^-$ where w is 1 to 3 and each $R^b$ is independently hydrogen, hydroxyl, $C_{1-4}$ alkyl or hydroxy-($C_{1-4}$ alkyl).

Other useful amine surfactants include those that can be represented by the formula (IV)

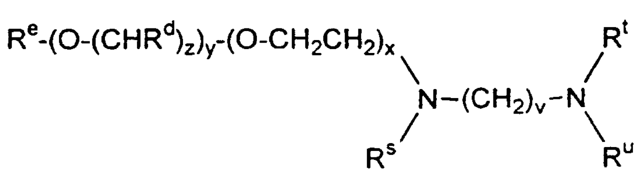

(IV)

where $R^d$, $R^e$, x, y and z are as defined immediately above, v is a number from 2 to 6, and $R^s$, $R^t$ and $R^u$ are independently $C_{1-4}$ alkyl or $-(CH_2CH_2-O)_kR^c$ where $R^c$ is hydrogen, $C_{1-4}$ alkyl or $C_{2-4}$ acyl and each k is an average number such that the total number of oxyethylene units in a molecule of the amine surfactant is 1 to about 50.

The alkylether surfactant(s) and the amine surfactant(s), when provided together as a surfactant mixture in a ratio in the indicated range, have been found generally to have at least one of the following unexpected effects:

(i) the surfactants interact in a synergistic manner in enhancing biological effectiveness of the anionic exogenous chemical substance when the plant treatment composition is applied to foliage of a plant;
(ii) the surfactants together provide surprisingly enhanced rainfastness when the plant treatment composition is applied to foliage of a plant and rain falls or overhead irrigation is activated shortly (*e.g.*, within about 6 hours) after application;
(iii) the surfactants together unexpectedly reduce antagonism of biological effectiveness of the anionic exogenous chemical substance by a second exogenous chemical substance also present in the composition, in particular where the exogenous chemical substances are herbicides.

A "synergistic" interaction between one or more alkylether surfactants and one or more amine surfactants is to be understood herein as one satisfying the following test. notwithstanding any other definition of synergism that has been applied in the art. This test is conducted using a total amount of alkylether and/or amine surfactants that is a "suboptimal adjuvant amount" as defined herein. If such total amount of a mixture of alkylether and amine surfactants elicits biological effectiveness of a co-applied anionic exogenous chemical substance that is greater than the biological effectiveness elicited either by the same total amount of the alkylether surfactant(s) in the substantial absence of amine surfactant. or by the same total amount of the amine surfactant(s) in the substantial absence of alkylether surfactant, the alkylether and amine surfactant components of the mixture are considered to interact in a synergistic manner.

An "adjuvant amount" of a surfactant or mixture of surfactants is an amount sufficient, when applied to plant foliage together with an anionic exogenous chemical substance, to elicit a degree of biological effectiveness that is observably greater than that provided by the anionic exogenous chemical substance applied in the absence of any surfactant. A "suboptimal adjuvant amount" of a surfactant or mixture of surfactants is an adjuvant amount eliciting a degree of biological effectiveness that is observably less than that elicited by the same surfactant or mixture of surfactants in twice the amount. Surfactant amounts are conveniently expressed as weight/volume concentrations in aqueous plant treatment compositions and as weight/weight concentrations in liquid or solid concentrate compositions.

The present invention is not to be construed as being limited to situations where the surfactant mixture is used in a suboptimal adjuvant amount. Only the test for synergism between the alkylether and amine components of the surfactant mixture requires application in a suboptimal adjuvant amount.

It is further to be understood that the synergistic interaction between the alkylether and amine surfactants characteristic of compositions of the invention is not necessarily exhibited on all plant species or under all application conditions. being subject to the normal variability of complex biological phenomena. However, the generally superior biological effectiveness resulting from this synergistic interaction is exhibited with sufficient frequency and consistency to represent a major advance in the art.

By "rainfastness" herein is meant the degree to which biological effectiveness of an exogenous chemical substance is maintained when rain falls or overhead irrigation is activated shortly after foliar application of a plant treatment composition containing the exogenous chemical substance. Rainfastness can be measured by comparing biological effectiveness with and without rain or overhead irrigation. A suitable test for rainfastness involves overhead watering of treated plants by means of a sprinkler or spray system. in an amount of about 2.5 to about 25 mm at a rate of about 10 to about 100 mm/hour, beginning about 5 minutes to about 6 hours after application of the plant treatment composition; and recording biological effectiveness by comparison with treated plants not subjected to such overhead watering.

By "antagonism" herein is meant a reduction in biological effectiveness of a first exogenous chemical substance when applied in a plant treatment composition, such reduction resulting from the inclusion in the same plant treatment composition of a second exogenous chemical substance.

A plant treatment composition useful in the method of the invention can be provided to the end-user by a commercial manufacturer or formulator as a "ready-to-use" product. As an alternative, the plant treatment composition can be prepared by the end-user by dissolving, dispersing or diluting in water a first concentrate composition containing the anionic exogenous chemical substance. a second concentrate composition containing the alkylether component of the surfactant mixture and a third concentrate composition containing the amine component of the surfactant mixture. As a further alternative, the plant treatment composition can be prepared by the end-user by dissolving, dispersing or diluting in water a first concentrate composition containing the anionic exogenous chemical substance and a second concentrate composition containing the surfactant mixture. As a still further alternative, the plant treatment composition can be prepared by the end-user by dissolving, dispersing or diluting in water a single concentrate composition containing the anionic exogenous chemical substance and the surfactant mixture. Other ways of preparing the plant treatment composition will be apparent to those of skill in the art.

Also useful in practice of the present invention is a concentrate composition for application in an aqueous carrier to foliage to elicit a biological effect, comprising about 10% to about 90% by weight of an anionic exogenous chemical substance expressed as acid equivalent (a.e.), together with an alkylether surfactant and an amine surfactant such that, when the concentrate composition is dissolved, dispersed or diluted in a suitable volume of water, a plant treatment composition useful in the method of the invention as provided above is formed. Such concentrate composition can be solid or liquid. A contemplated solid concentrate composition contains up to about 90% a.e. by weight of the exogenous chemical substance. A contemplated liquid concentrate composition contains up to about 50% by weight of the exogenous chemical substance expressed as acid equivalent (a.e.).

## DETAILED DESCRIPTION OF THE INVENTION

### The anionic exogenous chemical substance

Examples of anionic exogenous chemical substances that can be used in compositions useful in the method of the present invention include, but are not limited to, chemical pesticides (such as herbicides, algicides. fungicides, bactericides, viricides, insecticides, aphicides, miticides, nematicides and molluscicides), plant growth regulators, fertilizers and nutrients, gametocides, defoliants, desiccants, mixtures thereof and the like. Although the disclosure herein relates to "an anionic exogenous chemical substance", it is to be understood that more than one anionic exogenous chemical substance can be included if desired.

A preferred group of anionic exogenous chemical substances consists of those that are normally applied post-emergence to foliage of plants. *i.e.*, foliar-applied anionic exogenous chemical substances. An especially preferred group of foliar-applied anionic exogenous chemical substances consists of those that are systemic in plants, that is, translocated to some extent from their point of entry in the foliage to other parts of the plant where they can usefully exert their desired biological effect.

Especially preferred among these are herbicides, plant growth regulators and nematicides, particularly those that have a molecular weight, excluding counterions, of less than about 300.

Among such compounds, an even more preferred category consists of nematicides such as those disclosed in U.S. Patent No. 5,389,680. Preferred nematicides of this group are 3,4,4-trifluoro-3-butenoic acid or N-(3,4,4-trifluoro-1-oxo-3-butenyl)glycine.

In one embodiment, the anionic exogenous chemical substance is a herbicide. Suitable herbicides include, without restriction, acifluorfen, asulam, benazolin, bentazon, bilanafos, bromacil, bromoxynil, carfentrazone, chloramben, clopyralid, 2,4-D, 2,4-DB, dalapon, dicamba, dichlorprop, diclofop, endothall, fenac, fenoxaprop, flamprop, fluazifop, flumiclorac. fluoroglycofen, fomesafen, fosamine, glufosinate, glyphosate, haloxyfop, imazameth, imazamethabenz, imazamox, imazapic, imazapyr, imazaquin, imazethapyr, ioxynil, MCPA, MCPB, mecoprop, methylarsonic acid. naptalam, nonanoic acid, picloram, quinclorac, quizalofop, sulfamic acid, 2,3,6-TBA, TCA, triclopyr and agriculturally acceptable salts thereof. Especially preferred herbicides are those whose molecular structure comprises at least one of each of amine, carboxylate, and either phosphonate or phosphinate functional groups. This category includes the herbicides N-phosphonomethylglycine (glyphosate) and DL-homoalanin-4-yl(methyl) phosphinate (glufosinate). Another preferred group of herbicides are those of the imidazolinone class, including imazameth, imazamethabenz, imazamox, imazapic, imazapyr, imazaquin and imazethapyr.

The invention is illustrated herein by particular reference to glyphosate. Although glyphosate has three acid sites, and can therefore form tribasic salts, preferred aqueous compositions have a pH value not greater than about 8, at which pH value the fraction of glyphosate existing as a tribasic salt is negligibly small. Only the two acid sites that are significantly deprotonated at pH 8 are therefore considered herein. One of these is on the phosphonate moiety, and the other is on the carboxylate moiety, of the glyphosate molecule. At a pH of around 4 to 5, monovalent glyphosate anions predominate.

In plant treatment compositions useful in the method of the invention, the amount of anionic exogenous chemical substance present, in all forms thereof, is sufficient when applied to foliage of a plant to elicit the desired biological activity. Such compositions are sometimes referred to as "spray compositions", "sprayable compositions" or "ready-to-use compositions" and typically contain about 0.02% by weight to about 2% by weight of the anionic exogenous chemical substance, expressed as acid equivalent (a.e.). For some purposes such compositions can contain up to about 5% a.e. by weight or even 10% a.e. by weight.

In concentrate compositions useful in practicing the invention, the amount of anionic exogenous chemical substance present. in all forms thereof, is sufficient, upon dilution, dissolution or dispersion in a suitable volume of water to form a plant treatment composition. and upon application of the plant treatment composition to foliage of a plant, to elicit the desired biological activity.

As a significant portion of the cost of a packaged concentrate composition is the volume-related cost of packaging, transport and storage, it is desirable to increase to the maximum practicable extent the concentration, or loading, of exogenous chemical substance in the composition. Generally the factor that limits loading of a liquid composition is physical stability of the composition under a range of storage conditions. The upper limit of loading, particularly in a liquid concentrate composition, depends on the nature and concentration of other ingredients in the composition and can be readily determined by routine experimentation using procedures known in the art.

Although the anionic exogenous chemical substance can be present in its acid form, it is preferred that it be present predominantly in the form of a salt or mixture of salts. Preferably each such salt is water-soluble and has a cationic counterion of molecular weight lower than about 100. In especially preferred water-soluble salts the cationic counterion is monovalent and is selected from alkali metal cations, ammonium cations, and organic ammonium and sulfonium cations having in total 1-6 carbon atoms.

In particular where the anionic exogenous chemical substance is glyphosate, illustrative cationic counterions suitable for use in compositions of the invention are sodium, potassium, ammonium, dimethylammonium, isopropylammonium, monoethanolammonium and trimethylsulfonium cations.

Throughout this specification, all references to an anionic exogenous chemical substance in general can be taken to apply to glyphosate in particular, unless the context demands otherwise.

<u>The alkylether surfactant</u>

As indicated above, the alkylether surfactant component of compositions useful in the method of the invention comprises one or more surfactants each having the formula (I)

$$R^{12}\text{-O-}(CH_2CH_2O)_n((CHR)_2O)_m\text{-}R^{13} \quad (I)$$

wherein $R^{12}$ is a linear aliphatic saturated or unsaturated hydrocarbyl group having about 16 to about 22 carbon atoms, n is an average number of about 10 to about 100, m is an average number of 0 to about 5, one R in each $-((CHR)_2O)-$ group is hydrogen and the other R is methyl, and $R^{13}$ is a hydrogen, $C_{1-4}$ alkyl or $C_{2-4}$ acyl group.

Preferably $R^{12}$ is linear, more preferably a linear $C_{16}$ or $C_{18}$ alkyl, alkenyl or alkadienyl group, for example a cetyl, stearyl, oleyl or linoleyl group. Advantageously the alkylether surfactant component is a mixture of surfactants having various $R^{12}$ groups. For example, it may be a product described in cosmetic literature as "ceteareth", wherein $R^{12}$ groups are predominantly cetyl and stearyl groups. Alternatively, the alkylether surfactant component can be derived from a natural oil or fat. For example, if the source is beef tallow, $R^{12}$ groups are predominantly cetyl, stearyl and oleyl. If the source is corn oil or soybean oil, $R^{12}$ groups are predominantly oleyl and linoleyl. If the source is palm oil, $R^{12}$ groups are predominantly cetyl and oleyl. If the source is cottonseed oil, $R^{12}$ groups are predominantly cetyl, oleyl and linoleyl.

Preferably n (the average number of oxyethylene units) is about 7 to about 50, more preferably about 10 to about 40. Preferably m is 0 and $R^{13}$ is hydrogen.

Among particularly preferred alkylether surfactants are ceteth-10, available for example as Brij™ 56 of ICI; ceteth-20. available for example as Brij™ 58 of ICI; steareth-20, available for example as Brij™ 78 of ICI. Emthox™ 5888-A of Henkel and STA-20 of Heterene; steareth-30, available for example as STA-30 of Heterene; ceteareth-20, available for example as Hetoxol™ CS-20 of Heterene; ceteareth-27, available for example as Plurafac™ A-38 of BASF; and oleth-20, available for example as Brij™ 98 of ICI and Trycol™ 5971 of Henkel.

<u>The amine surfactant</u>

As indicated above. the amine surfactant component of compositions useful in the method of the invention preferably comprises one or more surfactants each having, at a pH of about 4, the formula (II)

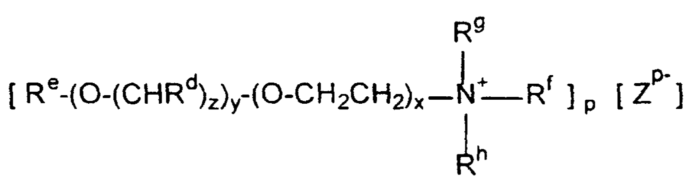

(II)

or the formula (III)

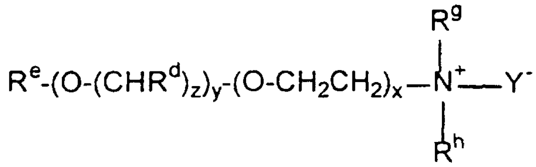

(III)

where $R^e$ is hydrogen or a linear or branched $C_{8-20}$ aliphatic hydrocarbyl group; each z is independently 2 or 3; each $R^d$ is hydrogen or methyl whereby if z is 2 at least one $R^d$ in the two-$(CHR^d)$- groups is methyl; y is 0 to 7 such that the total number of carbon atoms in the group $R^e$-$(O-(CHR^d)_z)_y$- is 8 to 24; x is 0 to 5; $R^f$ is hydrogen, $C_{1-4}$ alkyl or benzyl; $R^g$ is $C_{1-4}$ alkyl or-$(CH_2CH_2-O)_{x'}R^c$ and $R^h$ is $C_{1-4}$ alkyl or -$(CH_2CH_2-O)_{x''}R^c$, where $R^c$ is hydrogen, $C_{1-4}$ alkyl or $C_{2-4}$ acyl and x' and x" are average numbers such that x + x' + x" (the total number of oxyethylene units in a molecule of the amine surfactant) is 1 to about 50; $Z^{p-}$ is a suitable anion; p is 1 or 2; and $Y^-$ is an anionic group selected from $-O^-$, $-(CHR^b)_w-COO^-$ and $-(CHR^b)_w-SO_3^-$ where w is 1 to 3 and each $R^b$ is independently hydrogen, hydroxyl, $C_{1-4}$ alkyl or hydroxy-($C_{1-4}$ alkyl). Other useful amine surfactants include those that can be represented by the formula (IV)

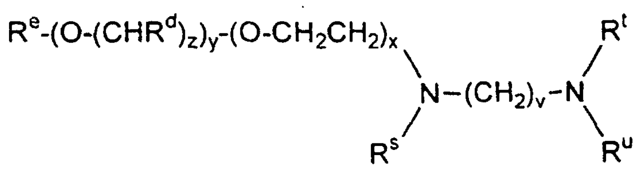

(IV)

where $R^d$, $R^e$, x, y and z are as defined immediately above, v is a number from 2 to 6, and $R^s$, $R^t$ and $R^u$ are independently $C_{1-4}$ alkyl or $-(CH_2CH_2-O)_kR^c$ where $R^c$ is hydrogen, $C_{1-4}$ alkyl or $C_{2-4}$ acyl and each k is an average number such that the total number of oxyethylene units in a molecule of the amine surfactant is 1 to about 50.

When a maximum or minimum "average number" is recited herein with reference to a structural feature such as oxyethylene units, it will be understood by those skilled in the art that the integer number of such units in individual molecules in a surfactant preparation typically varies over a range that can include integer numbers greater than the maximum or smaller than the minimum "average number". The presence in a composition of individual surfactant molecules having an integer number of such units outside the stated range in "average number" does not remove the composition from the scope of the present invention, so long as the "average number" is within the stated range and other requirements are met.

Illustrative surfactant types that can be useful as part or all of the amine surfactant component of compositions useful in the method of the invention include the following:

(A) Surfactants of formulas (II) or (III) where $R^e$ is a $C_{8-20}$ aliphatic, saturated or unsaturated, linear or branched hydrocarbyl chain and y is 0. In this group $R^e$ alone forms the hydrophobic moiety of the surfactant and is attached directly to the amine or ammonium group, as in alkylamines, or by an ether linkage formed by the oxygen atom of an oxyethylene group or the terminal oxygen atom of a polyoxyethylene chain, as in certain alkyletheramines. Illustrative subtypes having different hydrophilic moieties include:

(A-1) Surfactants of formula (II) wherein $R^g$ is $-(CH_2CH_2-O)_{x'}H$ and $R^h$ is $-(CH_2CH_2-O)_{x''}H$ where x' + x" is an average number of 2 to about 30, and $R^f$ is hydrogen or methyl. This subtype includes commercial surfactants known in the art or referred to herein as "polyoxyethylene alkylamines" (where x is 0 and $R^f$ is hydrogen), certain "polyoxyethylene alkyletheramines" (where x is 1-5 and $R^f$ is hydrogen), and "polyoxyethylene N-methyl alkylammonium salts", illustratively chloride salts (where x is 0, $R^f$ is methyl, $Z^{p-}$ is a chloride anion and p is l). Suitable examples are polyoxyethylene (2) cocoamine, polyoxyethylene (5) tallowamine, polyoxyethylene (10) cocoamine and polyoxyethylene (15) tallowamine, available for example from Akzo as Ethomeen™ C/12, Ethomeen™ T/15, Ethomeen™ C/20 and Ethomeen™ T/25 respectively, a surfactant conforming, when its amine group is non-protonated, to the formula

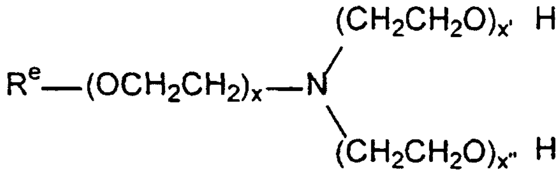

where $R^e$ is $C_{12-15}$ alkyl, x is 3 and x' + x" is an average number of about 5, as disclosed in U.S. Patent No. 5,750,468, and polyoxyethylene (2) N-methyl cocoammonium chloride, polyoxyethylene (2) N-methyl stearylammonium chloride, polyoxyethylene (10) N-methyl tallowammonium chloride and polyoxyethylene (15) N-methyl cocoammonium chloride, available for example from Akzo as Ethoquad™ C/12, Ethoquad™ 18/12, Ethoquad™ T/20 and Ethoquad™ C/25 respectively. In cases where $R^f$ is hydrogen, *i.e.*, in tertiary amine surfactants as opposed to quaternary ammonium surfactants, the anion $Z^{p-}$ is typically not supplied with the surfactant. However. in a glyphosate-containing formulation at a pH of about 4-5, it will be recognized that the anion $Z^{p-}$ can be an anion of the anionic exogenous chemical substance, for example glyphosate.

(A-2) Surfactants of formula (II) where x is 1-5, and $R^f$, $R^g$ and $R^h$ are independently $C_{1-4}$ alkyl. This subtype includes certain "polyoxyethylene N-methyl alkyletherammonium salts", illustratively chloride salts (where $R^f$, $R^g$ and $R^h$ are each methyl, $Z^{p-}$ is a chloride anion and p is l).

(A-3) Surfactants of formula (III) wherein $Y^-$ is an anionic oxide group. This subtype includes commercial surfactants known in the art or referred to herein as "polyoxyethylene alkylamine oxides" (where x is 0, $R^g$ is $-(CH_2CH_2-O)_{x'}H$ and $R^h$ is $-(CH_2CH_2)-O)_{x''}H$ where x' + x" is an average number of 2 to about 30), and certain "polyoxyethylene alkyletheramine oxides" (where x is 1-5, $R^g$ is $-(CH_2CH_2-O)_{x'}H$ and $R^h$ is $-(CH_2CH_2-O)_{x''}H$ where x' + x" is an average number of 2 to about 30). Suitable examples are polyoxyethylene (2) cocoamine oxide, sold by Akzo as Aromox™ C/12, and polyoxyethylene (10-20) tallowamine oxides, as disclosed in U.S. Patent No. 5,118,444.

(B) Surfactants of formulas (II) or (III) where $R^e$ is a $C_{8-18}$ aliphatic. saturated or unsaturated. linear or branched hydrocarbyl chain, y is 1, z is 3, each $R^d$ is hydrogen, and n is 0. In this group $R^e$-$O(CH_2)_3$- forms the hydrophobic moiety of the surfactant which is attached directly to the amine or ammonium group. These surfactants form a category of alkyletheramines as disclosed in U.S. Patent No. 5,750,468. Illustrative subtypes have the different hydrophilic moieties exemplified in (A-1) arid (A-3) above. Suitable examples are a surfactant conforming, when its amine group is non-protonated, to the formula

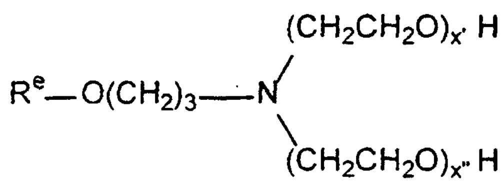

a surfactant conforming to the formula

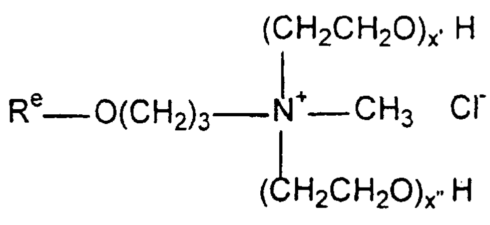

,

and a surfactant conforming to the formula

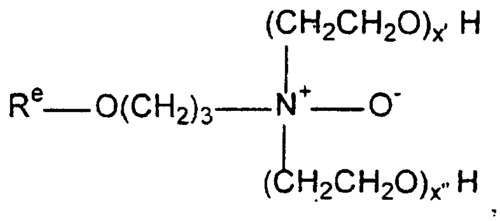

where, in each of the three formulas immediately above, $R^e$ is $C_{12-15}$ alkyl and x' + x" is an average number of about 5. as disclosed in U.S. Patent No. 5,750,468.

(C) Surfactants of formula (II) or (III) where $R^e$ is a $C_{8-18}$ aliphatic, saturated or unsaturated, linear or branched hydrocarbyl chain, y is 1-5, each $-O-(CHR^d)_z-$ is a group $-OCH(CH_3)CH_2-$ and x is 0. In this group $R^e$ together with the $-OCH(CH_3)CH_2-$ group or groups forms the hydrophobic moiety of the surfactant which is attached directly to the amino function. These surfactants form a further category of alkyletheramines as disclosed in U.S. Patent No. 5,750,468. Illustrative subtypes have the different hydrophilic moieties exemplified in (A-1) and (A-3) above. A suitable example is a surfactant of formula (II) conforming. when its amine group is non-protonated. to the formula

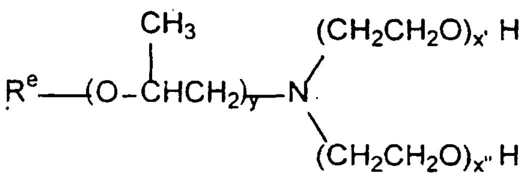

where $R^e$ is $C_{12-15}$ alkyl, y is 2 and x' + x" is an average number of about 5, as disclosed in U.S. Patent No. 5,750,468.

(D) Surfactants of formula (II) where $R^e$ is hydrogen, y is 3-8, each $-O-(CHR^d)_z-$ is a group $-OCH(CH_3)CH_2-$ and x is 1-3. In this group the polyether chain of $-OCH(CH_3)CH_2-$ groups (a polyoxypropylene chain) forms the hydrophobic moiety of the surfactant which is linked via one or more oxyethylene units to the amino function. In preferred surfactants of this group, x is l, and $R^f$, $R^g$ and $R^h$ are independently $C_{1-4}$ alkyl. These surfactants are a subclass of the polyoxypropylene quaternary ammonium salts disclosed in U.S. Patent No. 5,652,197. In a suitable example, y is 7, x is l, $R^f$, $R^g$ and $R^h$ are each methyl, $Z^{p-}$ is a chloride anion and p is 1.

(E) Surfactants of formula (IV) where $R^e$ is a $C_{8-18}$ aliphatic, saturated or unsaturated. linear or branched hydrocarbyl chain, x is 0, y is 0 and $R^s$, $R^t$ and $R^u$ are independently $-(CH_2CH_2-O)_kH$ groups where each k is an average number such that Σk is 1 to about 50. This type includes surfactants known in the art or referred to herein as polyoxyethylene N-alkyl alkylenediamines. An illustrative example is polyoxyethylene N-oleyl-1.3-diaminopropane having 3 oxyethylene units per molecule, as disclosed in French Patent Application No. 2 648 316.

In surfactants of formula (II), $Z^{p-}$ can be any suitable anion but preferably is chloride, bromide, iodide, sulfate, ethosulfate, phosphate, acetate, propionate, succinate, lactate, citrate or tartrate, or, as indicated above, an anion of the anionic exogenous chemical substance, for example glyphosate.

Presently the most preferred amine surfactants for use in compositions of the invention are polyoxyethylene (2-20) $C_{12-18}$ alkylamines and alkylammonium chlorides.

<u>Amounts and ratios of alkylether and amine surfactants</u>

The present invention is based in part on the unexpected discovery that biological effectiveness of an anionic exogenous chemical substance such as glyphosate herbicide in the presence of a mixture of alkylether and amine surfactants as defined herein can be significantly greater than that obtained in the presence of either the alkylether or the amine surfactant alone, at the same total surfactant concentration. The ratio of the alkylether surfactant component to the amine surfactant component producing this surprisingly synergistic interaction is not narrowly critical between about 1:10 and about 10:1 by weight. However, it will generally be found suitable to provide a ratio of about 1:5 to about 5:1, for example about 1:3 to about 3:1. An optimum ratio for particular surfactants. with a particular anionic exogenous chemical substance under particular conditions, can readily be determined by one of skill in the art by routine experimentation.

The present invention provides the greatest benefit where the amount of surfactant relative to the amount of

anionic exogenous chemical substance applied is fairly low, specifically no higher than about 0.5 parts by weight of surfactant per part by weight of the anionic exogenous chemical substance. expressed as acid equivalent. At higher surfactant levels. typically either one of the surfactant components alone imparts a high degree of biological effectiveness and no great further advantage accrues from use of the mixture. At a surfactant rate lower than about 0.05 part by weight per part by weight of the anionic exogenous chemical substance, the synergistic interaction can be evident but the total amount of surfactant is normally insufficient to provide a useful magnitude of enhancement in biological effectiveness.

For example, where the anionic exogenous chemical substance is glyphosate, the greatest benefit of the invention is typically realized at a weight ratio of surfactant to glyphosate a.e. of about 0.1:1 to about 0.4:1.

In a plant treatment composition useful in the method of the invention. the concentration of alkylether and amine surfactants together is preferably not greater than about 7.5 g/l, although higher concentrations can be used if desired. More preferably, the concentration of alkylether and amine surfactants together is about 0.5 to about 5 g/l, for example about 1 to about 3 g/l.

In a liquid concentrate composition useful in practicing the invention, the concentration of alkylether and amine surfactants together is typically about 25 to about 250 g/l, more typically about 50 to about 150 g/l. In a solid concentrate composition useful in practicing the invention. the concentration of alkylether and amine surfactants together is typically about 3% to about 30% by weight, more typically about 6% to about 18% by weight.

<u>Other ingredients</u>

Compositions useful in the method of the invention can contain agriculturally acceptable. materials other than an anionic exogenous chemical substance or salt thereof, an alkylether surfactant and an amine surfactant.

For example, more than one anionic exogenous chemical substance can be included. For example, a glyphosate composition of the invention can optionally contain, in addition to glyphosate. any other anionic herbicide selected from those hereinbefore listed.

In a particular embodiment of the invention, glyphosate is present in a plant treatment composition together with a second anionic herbicide which is normally antagonistic to the biological effectiveness of glyphosate. The second anionic herbicide is typically one that produces visible symptoms of phytotoxicity in a treated plant within about 4 days after application to foliage. In preferred compositions useful in this embodiment. the second anionic herbicide is glufosinate in the form of a salt or salts thereof. Glufosinate typically elicits symptoms of phytotoxicity in a treated plant more rapidly than glyphosate and often antagonizes the longer-term herbicidal effectiveness of glyphosate when the two herbicides are co-applied in a formulation or tank-mixture of prior art. Surprisingly and by contrast, such antagonism has generally been found to be substantially reduced when glyphosate and glufosinate are accompanied by an alkylether and an amine surfactant in accordance with the present invention. It is contemplated that reduction in antagonism is a feature of compositions containing any two anionic exogenous chemical substances, one of which normally antagonizes the biological effectiveness of the other.

Illustratively in a composition useful in the method of the invention containing glyphosate and a second anionic herbicide, the a.e. weight ratio of the second anionic herbicidal substance, e.g., glufosinate, to glyphosate can be about 1:1 to about 1:30, preferably about 1:2 to about 1:20.

A herbicidal composition useful in the method of the invention can optionally contain, in addition to an anionic herbicidal compound such as glyphosate or a salt thereof, a herbicidal compound that is other than anionic, such as for example an ester derivative of an anionic herbicide, or a herbicide selected from acetochlor, aclonifen, alachlor, ametryn, amidosulfuron. anilofos, atrazine, azafenidin. azimsulfuron, benfluralin, benfuresate, bensulfuron-methyl, bensulide, benzofenap, bifenox, bromobutide, bromofenoxim, butachlor, butamifos, butralin, butroxydim, butylate, cafenstrole, carbetamide, carfentrazone-ethyl, chlomethoxyfen, chlorbromuron, chloridazon, chlorimuron-ethyl, chlorotoluron, chlornitrofen, chlorotoluron, chlorpropham, chlorsulfuron, chlorthal-dimethyl, chlorthiamid, cinmethylin, cinosulfuron, clethodim, clodinafop-propargyl, clomazone, clomeprop, cloransulam-methyl, cyanazine, cycloate, cyclosulfamuron, cycloxydim, cyhalofop-butyl, daimuron, desmedipham, desmetryn, dichlobenil, diclofop-methyl, diflufenican, dimefuron, dimepiperate, dimethachlor, dimethametryn, dimethenamid, dinitramine, dinoterb, diphenamid, dithiopyr, diuron, EPTC, esprocarb, ethalfluralin, ethametsulfuron-methyl, ethofumesate, ethoxysulfuron, etobenzanid, fenoxaprop-ethyl, fenuron, flamprop-methyl, flazasulfuron, fluazifop-butyl, fluchloralin, flumetsulam, flumiclorac-pentyl, flumioxazin, fluometuron, fluorochloridone, fluoroglycofen-ethyl, flupoxam, flurenol, fluridone, fluroxypyr-1-methylheptyl, flurtamone, fluthiacet-methyl, fomesafen, halosulfuron, haloxyfop-methyl, hexazinone, imazosulfuron, indanofan, isoproturon, isouron, isoxaben, isoxaflutole, isoxapyrifop, lactofen, lenacil, linuron, mefenacet, metamitron, metazachlor, methabenzthiazuron, methyldymron, metobenzuron, metobromuron, metolachlor, metosulam, metoxuron, metribuzin, metsulfuron, molinate, monolinuron, naproanilide, napropamide, naptalam, neburon, nicosulfuron, norflurazon, orbencarb, oryzalin, oxadiargyl, oxadiazon, oxasulfuron, oxyfluorfen, pebulate, pendimethalin, pentanochlor, pentoxazone, phenmedipham, piperophos, pretilachlor, primisulfuron, prodiamine, prometon, prometryn, propachlor, propanil, propaquizafop, propazine, propham, propisochlor, propyzamide. prosulfocarb, prosulfuron, pyraflufen-ethyl, pyrazolynate, pyrazosulfuron-ethyl, pyrazoxyfen, pyributicarb, pyridate, pyriminobac-methyl, quinclorac, quinmerac, quizalofop-ethyl, rimsulfuron, sethoxydim, siduron, simazine, simetryn, sulcotrione, sulfentrazone, sulfometuron, sulfosulfuron, tebutam, tebuthiuron, terbacil, terbumeton, terbuthylazine, terbutryn, thenylchlor, thiazopyr, thifensulfuron, thiobencarb, tiocarbazil, tralkoxydim, triallate, triasulfuron, tribenuron, trietazine, trifluralin, triflusulfuron and vernolate.

In a particular embodiment of the invention, glyphosate is present in a plant treatment composition together with a second herbicide that is other than anionic and is normally antagonistic to the biological effectiveness of glyphosate. Typically the second herbicide is one that produces visible symptoms of phytotoxicity in a treated plant within about 4 days after application to foliage. In preferred compositions useful in this embodiment. the second herbicide is selected from carfentrazone-ethyl, flumiclorac-pentyl, flumioxazin, fluoroglycofen-ethyl, fomesafen, lactofen and oxyfluorfen. Surprisingly, the antagonism of glyphosate herbicidal effectiveness often seen in prior art compositions or tank-mixtures with these herbicides has generally been found to be substantially reduced when glyphosate and the second herbicide, for example oxyfluorfen, are accompanied by an alkylether and an amine surfactant in accordance with the present invention.

Illustratively in a composition of the invention containing glyphosate and a second herbicide that is other than anionic, the weight ratio of the second herbicide. *e.g.*, carfentrazone-ethyl, to glyphosate a.e. can be about 1:1 to about 1:250. Where the second herbicide, *e.g.*, oxyfluorfen, is required in higher dosage amounts to produce visible symptoms of phytotoxicity, the weight ratio of the second herbicide to glyphosate a.e. is preferably about 1:1 to about 1:30, more preferably,about 1:2 to about 1:20.

Exogenous chemical substances useful in compositions of the invention can be selected from those listed in standard reference works such as *The Pesticide Manual*, 11th Edition, British Crop Protection Council (1997), and *Farm Chemicals Handbook '97*, Meister Publishing Company (1997).

Various agriculturally acceptable adjuvants or excipient substances can also be included, whether or not their purpose is to contribute directly to the biological effectiveness of an exogenous chemical substance in a treated plant. For example, where the exogenous chemical substance is a herbicide, liquid nitrogen fertilizer or ammonium sulfate can be included in the composition. Ammonium sulfate and certain other inorganic ammonium salts are known to enhance herbicidal effectiveness of glyphosate and other herbicides on certain plant species.

Other optional components of compositions useful in the method of the invention include agents to modify color, odor, viscosity, gelling properties, freezing point, stability or texture.

One or more surfactant(s), other those of the classes specifically described above, can also be included in a contemplated composition. A wide range of surfactants is available to the formulator of exogenous chemical substances and can be selected readily from standard works such as *McCutcheon's Emulsifiers and Detergents*, 1998 Edition, MC Publishing Company, or *Handbook of Industrial Surfactants*, 2nd Edition, Gower (1997).

There is no restriction on the type or chemical class of such additional surfactant that can be used. Nonionic, anionic, cationic and amphoteric types, or combinations of more than one of these types, are all useful in particular situations. For example, soybean lecithin, which contains amphoteric acyl phosphatidylcholine surfactants, has been found useful in stabilizing certain liquid concentrate compositions as more particularly described below.

Another class of excipient material that can be useful in compositions useful in the method of the present invention is an oil, such as a triglyceride ester of fatty acids of animal, vegetable or synthetic origin, a paraffin, a polysiloxane, or a fatty acid or an ester or amide thereof. Natural triglyceride oils can be fractionated or not. Fractionation permits elimination of certain fatty acid chain lengths so as to modify melting point.

In a particular embodiment of the invention, one or more oil(s) are included, each having a chemical structure corresponding to formula (V):

$$R^4\text{-CO-Q-}R^5 \qquad (V)$$

wherein $R^4$ is a hydrocarbyl group having about 5 to about 21 carbon atoms, $R^5$ is a hydrocarbyl group having 1 to about 14 carbon atoms, the total number of carbon atoms in $R^4$ and $R^5$ is about 11 to about 27, and Q is O or NH. $R^4$ and $R^5$ are preferably linear hydrocarbyl chains. $R^4$ preferably has about 11 to about 21 carbon atoms and is preferably derived from a natural saturated or unsaturated fatty acid. $R^5$ is preferably an alkyl group with 1 to about 6 carbon atoms. Especially preferred oils of formula (V) are therefore $C_{1-6}$ alkylesters or $C_{1-6}$ alkylamides of fatty acids.

In certain preferred embodiments, an oil is included that is a $C_{1-4}$ alkylester of a $C_{12-18}$ fatty acid, more preferably a $C_{1-4}$ alkylester of a $C_{12-18}$ saturated fatty acid. Examples include methyl oleate. ethyl oleate, isopropyl myristate, isopropyl palmitate and butyl stearate. Butyl stearate is especially preferred.

When present. one or more oil(s) of formula (V) are preferably included in a ratio of total weight of such oil(s) to weight of the anionic exogenous chemical substance. expressed as acid equivalent, of about 1:100 to about 1:1,

though greater or lesser amounts can be found useful in particular situations.

Suitable concentrations of an oil of formula (V), if present, are about 0.001% to about 0.1% by weight in a plant treatment composition, and about 0.05% to about 5% by weight in a liquid concentrate composition. Higher or lower concentrations can be useful in particular situations.

Oil(s), if present. can be emulsified in a composition by means of the alkylether and/or amine surfactants. If desired, additional surfactant(s) can be included as emulsifier(s) for such oil(s).

Glycols form another class of excipient that can optionally be present in compositions useful in the method of the invention. For example, diethylene glycol and/or propylene glycol can be present as antifreezes, pour point depressants or in some other role. Polyglycols, such as polyethylene glycol having a molecular weight in the range from about 200 to about 800, especially about 400 to about 600, can also be useful for similar functions and/or as aids to inhibit gelling of the amine surfactant.

In preparing highly concentrated aqueous compositions useful in practicing the invention, certain coupling agents may be found beneficial in enhancing stability. These include low molecular weight alcohols such as ethanol, isopropanol and butanol, also dimethyl sulfoxide (DMSO), urea and tetrabutylammonium hydroxide.

Yet another class of excipient that can optionally be present is a solid microparticulate or nanoparticulate substance such as silica, which can serve as a stabilizer and/or thickener in liquid concentrate compositions.

Concentrate compositions

Although a plant treatment composition as described above can be prepared on-site as a dilute aqueous solution or dispersion immediately before application to foliage of a plant, a preferred embodiment of the invention involves dissolution, dispersion or dilution of a storage- stable concentrate composition. When dissolved or dispersed in, or diluted with, a suitable amount of water, such a concentrate composition forms a plant treatment composition useful in the method of the invention as described above. Thus the ratios of ingredients other than water defined for a plant treatment composition herein apply equally to a concentrate composition. Typically in preparing a plant treatment composition, one part by weight of a concentrate composition is added to about 9 to about 99 parts by weight of water; however greater or lesser amounts of water can be useful in particular situations.

Concentrate compositions useful in practicing the invention can be solid or liquid. Formulation types known in the art to be generally suitable for foliar-applied anionic exogenous chemical substances are useful for the present invention. These include, without restriction, concentrated aqueous solutions and dispersions. emulsions (including oil-in-water. water-in-oil and water-in-oil-in-water types), microemulsions, suspension concentrates, emulsifiable concentrates, suspoemulsions, wettable powders. water-soluble powders and granules, water-dispersible powders and granules, *etc*.

A solid concentrate composition useful in practicing the invention. such as a water-soluble or water-dispersible granule formulation, contains in total at least about 10% by weight and up to about 90% by weight of an anionic exogenous chemical substance expressed as acid equivalent. Preferably the content of exogenous chemical substance in a solid concentrate composition is about 25% to about 75%, more preferably about 50% to about 75%, a.e. by weight. Solid compositions are sometimes referred to as "dry" formulations; this should not be taken to imply that such compositions are entirely free of water or other liquid, merely that they feel dry to the touch.

In accordance with one embodiment of the invention. a solid concentrate composition consists essentially of an anionic exogenous chemical substance or salt thereof, an alkylether surfactant and an amine surfactant as herein defined. In accordance with another embodiment of the invention. a solid concentrate composition comprises these same ingredients together with other excipients. In accordance with a particular embodiment of the invention, a solid concentrate composition comprises an anionic exogenous chemical substance or salt thereof. an alkylether surfactant and an amine surfactant as herein defined, and ammonium sulfate. Preferred solid concentrate compositions are water-soluble or water-dispersible granules.

A liquid concentrate composition useful in practicing the invention, such as an aqueous solution or dispersion, contains in total at least about 10% by weight and up to about 50% or more by weight of an anionic exogenous chemical substance expressed as acid equivalent. Preferably the content of anionic exogenous chemical substance in a liquid concentrate composition is about 15% to about 45%, more preferably about 20% to about 40%, a.e. by weight. Weight/volume concentrations will vary depending on specific gravity of the liquid composition; however, typically the anionic exogenous chemical substance is present at about 180 to about 540 g a.e./l, more typically about 240 to about 480 g a.e./l.

Preferred liquid concentrate compositions have a continuous aqueous phase wherein is dissolved the anionic exogenous chemical substance in the form of a water-soluble salt thereof, forming an aqueous solution. The alkylether surfactant typically does not dissolve readily in this aqueous solution and instead forms a dispersed phase. The amine surfactant can be associated with the dispersed phase or distributed in the aqueous phase (for example as micelles) or both. The alkylether surfactant dispersion in such preferred compositions is stabilized by an emulsifying system, in

which the amine surfactant can play a role. In one embodiment, the emulsifying system comprises acyl phosphatidylcholine, for example in the form of soybean lecithin, and an oil of formula (V) above, such as butyl stearate. Optionally a coupling agent such as a low molecular weight alcohol, DMSO, urea or tetrabutylammonium hydroxide can be included to enhance stability. This can be found especially beneficial when it is desired to increase the concentration of the anionic exogenous chemical substance to a high level, for example, in the case of glyphosate, above about 24% a.e. by weight.

Illustratively, a concentrate composition useful in this embodiment of the invention, wherein the anionic exogenous chemical substance is glyphosate in the form of its isopropylammonium (IPA) salt. the alkylether surfactant is ceteareth-27 (*e.g.*, Plurafac™ A-38 of BASF) and the amine surfactant is polyoxyethylene (15) tallowamine (*e.g.*, Ethomeen™ T/25 of Akzo), has the following ingredients (all percentages are by weight):

| | |
|---|---|
| glyphosate salt | 24-48% (18-36% a.e.) |
| ceteareth-27 | 2-10% |
| polyoxyethylene (15) tallowamine | 2-10% |
| soybean lecithin | 1-10% |
| butyl stearate | 0.5-10% |
| coupling agent | 0-5% |
| water | to 100% |

In liquid concentrate compositions useful in this embodiment of the invention, a fraction of the anionic exogenous chemical substance, for example glyphosate, is typically strongly associated with, or entrapped by, the dispersed phase. When the composition is diluted with water for foliar application, the fraction associated with or entrapped by the dispersed phase greatly declines; however, upon evaporation of water from a spray deposit on a leaf surface it is believed that association with or entrapment by supramolecular surfactant structures occurs again.

The association of glyphosate with supramolecular surfactant structures in liquid concentrate compositions of this embodiment is believed to be correlated with physical stability of the composition. Less physically stable compositions, for example those in which phase separation occurs within 24 hours when stored without agitation at 20-25°C, and in particular those with a relatively high weight ratio of amine surfactant to lecithin, typically show a lesser degree of glyphosate association with or entrapment by supramolecular surfactant structures.

Without being bound by theory, it is theorized that the strong association between glyphosate and supramolecular surfactant structures in compositions of this embodiment of the invention plays a role in enhancing glyphosate uptake across leaf cuticles. The association or entrapment is readily detectable by NMR spectroscopy techniques. One such technique involves the following illustrative procedure.

A sample of the liquid concentrate composition. conveniently about 200 to about 500 µl, is placed in an NMR tube. A diffusion probe is used having a gradient coil capable of generating a linear field gradient of about 250 gauss/cm across the sample in response to a current pulse of 20 amp. Proton NMR spectra are recorded as a function of increasing field gradient. Data are collected using bipolar pulses and LEDS pulse sequence to measure diffusion by the pulse field gradient method of Wu *et al*., *Journal of Magnetic Resonance,* **A115**, 260-264, 1995.

The glyphosate resonance measured in the present procedure is that associated with the methylene group adjacent to the phosphonate moiety of the glyphosate molecule. which is well known in the art. Integrated intensity (amplitude) of the glyphosate resonance is measured in each spectrum and the natural logarithm of such amplitude is plotted against the square of the field gradient. Data falling on a straight line in such a plot are indicative of simple diffusion in a one-component system. Data falling on a curve that can be resolved into two straight-line components, as in Figure 1, are indicative of a two-component system having two pools of glyphosate that diffuse at different speeds. The faster-diffusing glyphosate represents the "free" pool, *i.e*., glyphosate present in the aqueous medium, and the slower-diffusing glyphosate represents the "entrapped" pool, *i.e*., glyphosate strongly associated with or entrapped by supramolecular aggregates formed by surfactants. The relative size of the two pools can be estimated by extrapolating the linear fit of each straight-line component to zero field gradient (the y-axis in the graph of Figure 1). The amount of glyphosate in a pool is proportional to the antilogarithm of the corresponding y-intercept value.

Certain aqueous concentrate compositions useful in practicing the invention can be described as stable dispersions. By "stable" in this context it is meant that no phase separation occurs during storage of a composition without agitation at 20-25°C for 24 hours. The more desirable aqueous concentrate compositions are dispersions in which no phase separation occurs during storage without agitation at constant or varying temperatures from about 10°C to about 40°C for 48 hours, even more desirably from about 0°C to about 50°C for 7 days, and most desirably about -10°C to about 60°C for 30 days. Stability at elevated temperatures for short time periods provides a good indication of long-term stability under normal storage conditions; it is contemplated that certain concentrate compositions useful in practicing the invention will be stable for periods of 1 year or more under normal storage conditions.

Process for making a liquid concentrate composition

Liquid concentrate compositions can be prepared by mixing the ingredients together in a suitable vessel. The degree of agitation required depends on the precise ingredients as will be understood by those of skill in the art; it will likewise be recognized that certain ingredients require special treatment.

An aqueous concentrate composition containing lecithin and butyl stearate. as described above. can be prepared in the following illustrative way.

Lecithin is added to water in a suitable vessel and is fan-mixed, for example with a Variac mixer, set at 30% of maximum voltage, for about 10 minutes. This results in the lecithin becoming hydrated. It is preferred to hydrate lecithin at an elevated temperature, for example around 50°C. To the hydrated lecithin in water are then added, in any order, the anionic exogenous chemical substance in the form of a water-soluble salt thereof, the alkylether surfactant. the amine surfactant and the butyl stearate. The vessel containing the resulting mixture is first agitated moderately, *e. g*., by hand shaking in the case of a small-scale preparation, and is then subjected to more vigorous mixing until homogeneous. This can be accomplished, for example, by fan-mixing with a Variac mixer, set at 30% of maximum voltage, for about 10 minutes. Alternatively, it can be accomplished by mixing with a Turrax mixer at 20,000 rpm for about 8 minutes. Optionally, the composition can then be microfluidized, for example using a Model M-110F microfluidizer of Microfluidics International Corp., for 5 cycles at 15.000 psi (69 MPa).

Liquid concentrate compositions useful in practicing the invention are not limited to those prepared by the above procedure or a variant thereof. Other processes suitable for making a liquid concentrate composition are described in the Examples or can be developed by one of skill in the art by routine experimentation.

Process for making a solid concentrate composition

A process for preparing a solid concentrate composition useful in practicing the invention comprises a first step of mixing an anionic exogenous chemical substance, or a salt thereof, or a mixture of such anionic exogenous chemical substance and salt thereof, in solid particulate form with an alkylether surfactant and an amine surfactant, and optionally with other desired ingredients, together with sufficient water to form a wet mix of consistency suitable for further process steps as described immediately below. The alkylether surfactant can be used in powder form or it can be melted prior to addition to the wet mix.

Such a process further comprises a second step of granulating the wet mix to form moist coherent granules, and a third step of drying the granules. Any granulating method known in the art to be suitable for the preparation of water-soluble or water-dispersible granules of an exogenous chemical substance can be used; preferred methods are pan granulation and extrusion granulation. The extrusion process described in United Kingdom Patent Application No. 1 433 882 is one illustrative process that can be useful in preparing granular compositions useful in practicing the present invention. Any drying method known in the art to be suitable for the preparation of water-soluble or water-dispersible granules of an exogenous chemical substance can be used; a preferred method is fluid-bed drying.

Solid concentrate compositions useful in practicing the invention are not limited to those prepared by the above procedure or a variant thereof. Other processes suitable for making a solid concentrate composition can be developed by one of skill in the art by routine experimentation.

Application of a plant treatment composition to foliage

Exogenous chemical substances are applied to plants at a rate sufficient to give the desired effect. These application rates are usually expressed as amount of exogenous chemical substance per unit area treated, e.g. grams per hectare (g/ha). What constitutes a "desired effect" varies according to the standards and practice of those who investigate, develop, market and use a specific class of exogenous chemical substances. For example, in the case of a herbicide, the amount applied per unit area to give, consistently and reliably, at least 85% control of a plant species as measured by growth reduction or mortality is often used to define a commercially effective rate.

Herbicidal effectiveness is one of the biological effects that can be enhanced through this invention. "Herbicidal effectiveness," as used herein, refers to any observable measure of control of plant growth, which can include one or more of the actions of (1) killing, (2) inhibiting growth, reproduction or proliferation, and (3) removing, destroying, or otherwise diminishing the occurrence and activity of plants.

The selection of application rates that are biologically effective for a specific anionic exogenous chemical substance is within the skill of the ordinary agricultural scientist. Those of skill in the art will likewise recognize that individual plant conditions, weather and growing conditions, as well as the specific anionic exogenous chemical substance and composition thereof selected, will influence the degree of biological effectiveness achieved in practicing this invention. Useful application rates for anionic exogenous chemical substances employed can depend upon all of the above conditions. With respect to the use of the method of this invention for glyphosate herbicide, much information

is known about appropriate application rates. Over two decades of glyphosate use and published studies relating to such use have provided abundant information from which a weed control practitioner can select glyphosate application rates that are herbicidally effective on particular species at particular growth stages in particular environmental conditions.

Herbicidal compositions of glyphosate or derivatives thereof are used to control a very wide variety of plants worldwide. Glyphosate compositions in accordance with the invention can be applied to a plant in a herbicidally effective amount, and can effectively control one or more plant species of one or more of the following genera without restriction: *Abutilon*, *Amaranthus*, *Artemisia*, *Asclepias*, *Avena, Axonopus*, *Borreria*, *Brachiaria, Brassica, Bromus, Chenopodium*, *Cirsium*, *Commelina*, *Convolvulus*, *Cynodon*, *Cyperus*, *Digitaria*, *Echinochloa*, *Eleusine*, *Elymus*, *Equisetum*, *Erodium*, *Helianthus*, *Imperata*, *Ipomoea*, *Kochia*, *Lolium*, *Malva*, *Oryza*, *Ottochloa*, *Panicum*, *Paspalum, Phalaris, Phragmites*, *Polygonum*, *Portulaca*, *Pteridium*, *Pueraria*, *Rubus*, *Salsola*, *Setaria*, *Sida*, *Sinapis*, *Sorghum, Triticum, Typha*, *Ulex*, *Xanthium* and *Zea*.

Particularly important annual broadleaf species for which glyphosate compositions are used are exemplified without limitation by the following: velvetleaf (*Abutilon theophrasti*), pigweed (*Amaranthus* spp.), buttonweed *(Borreria* spp.), oilseed rape, canola, indian mustard, *etc*. (*Brassica* spp.). commelina (*Commelina* spp.), filaree *(Erodium* spp.), sunflower (*Helianthus* spp.), momingglory (*Ipomoea* spp.), kochia (*Kochia scoparia*), mallow *(Malva* spp.), wild buckwheat, smartweed, *etc*. (*Polygonum* spp.), purslane (*Portulaca* spp.), russian thistle *(Salsola* spp.), sida (*Sida* spp.), wild mustard (*Sinapis arvensis*) and cocklebur (*Xanthium* spp.)

Particularly important annual narrowleaf species for which glyphosate compositions are used are exemplified without limitation by the following: wild oat (*Avena fatua*), carpetgrass (*Axonopus* spp.), downy brome (*Bromus tectorum*), crabgrass (*Digitaria* spp.), barnyardgrass (*Echinochloa crus-galli*), goosegrass *(Eleusine indica),* annual ryegrass (*Lolium multiflorum*), rice (*Oryza sativa*), ottochloa (*Ottochloa nodosa*), bahiagrass *(Paspalum notatum*), canarygrass *(Phalaris* spp.). foxtail (*Setaria* spp.), wheat (*Triticum aestivum*) and corn *(Zea mays*).

Particularly important perennial broadleaf species for which glyphosate compositions are used are exemplified without limitation by the following: mugwort *(Artemisia* spp.), milkweed (*Asclepias* spp.), canada thistle *(Cirsium arvense*), field bindweed (*Convolvulus arvensis*) and kudzu (*Pueraria* spp.).

Particularly important perennial narrowleaf species for which glyphosate compositions are used are exemplified without limitation by the following: brachiaria *(Brachiaria* spp.), bermudagrass (*Cynodon dactylon*), yellow nutsedge (*Cyperus esculentus*), purple nutsedge (*C*. *rotundus*), quackgrass *(Elymus repens),* lalang (*Imperata cylindrica*), perennial ryegrass *(Lolium perenne),* guineagrass (*Panicum maximum),* dallisgrass *(Paspalum dilatatum*), reed *(Phragmites* spp.), johnsongrass (*Sorghum halepense*) and cattail *(Typha* spp.).

Other particularly important perennial species for which glyphosate compositions are used are exemplified without limitation by the following: horsetail *(Equisetum* spp.), bracken (*Pteridium aquilinum*), blackberry (*Rubus* spp.) and gorse *(Ulex europaeus*).

Thus. the method of the invention where glyphosate is the anionic exogenous chemical substance can be useful on any of the above species. In a particular embodiment, a plant treatment composition as provided herein comprising glyphosate in the form of one or more salt(s) thereof is applied to foliage of crop plants genetically transformed to tolerate glyphosate. and simultaneously to foliage of weeds or undesired plants growing in close proximity to such crop plants. This process results in control of the weeds or undesired plants while leaving the crop plants substantially unharmed. Crop plants genetically transformed to tolerate glyphosate include those whose seeds are sold by Monsanto or under license from Monsanto bearing the Roundup Ready® trademark. These include varieties of cotton, soybean, canola and corn.

Application of plant treatment compositions to foliage of plants is preferably accomplished by spraying, using any conventional means for spraying liquids, such as spray nozzles or spinning-disk atomizers. The method of the present invention can be used in precision farming techniques, in which apparatus is employed to vary the amount of exogenous chemical substance applied to different parts of a field, depending on variables such as the particular plant species present, plant growth stage, soil moisture status, *etc*. In one embodiment of such techniques, a global positioning system operated with the spraying apparatus can be used to control application of the composition in desired amounts to different parts of a field.

A plant treatment composition is preferably dilute enough to be readily sprayed using standard agricultural spray equipment. Suitable application rates for the present invention vary depending upon a number of factors, including the type and concentration of active ingredient and the plant species involved. Useful rates for applying an aqueous composition to a field of foliage can range from about 25 to about 1.000 liters per hectare (l/ha), preferably about 50 to about 300 l/ha, by spray application.

## EXAMPLES

The following Examples are provided for illustrative purposes only and are not intended to limit the scope of

the present invention. The Examples will permit better understanding of the invention and perception of its advantages and certain variations of execution.

The following procedure was used for testing compositions of the Examples to determine herbicidal effectiveness. except where otherwise indicated.

Seeds of the plant species indicated were planted in 85 mm square pots in a soil mix which was previously steam sterilized and prefertilized with a 14-14-14 NPK slow release fertilizer at a rate of 3.6 kg/$m^3$. The pots were placed in a greenhouse with sub-irrigation. About one week after emergence, seedlings were thinned as needed. including removal of any unhealthy or abnormal plants, to create a uniform series of test pots.

The plants were maintained for the duration of the test in the greenhouse where they received a minimum of 14 hours of light per day. If natural light was insufficient to achieve the daily requirement, artificial light with an intensity of approximately 475 microeinsteins was used to make up the difference. Exposure-temperatures were not precisely controlled but averaged about 27°C during the day and about 18°C during the night. Plants were sub-irrigated throughout the test to ensure adequate soil moisture levels.

Pots were assigned to different treatments in a fully randomized experimental design with 3 replications. A set of pots was left untreated as a reference against which effects of the treatments could later be evaluated.

Application of glyphosate compositions was made by spraying with a track sprayer fitted with a 9501E nozzle calibrated to deliver a spray volume of 93 l/ha at a pressure of 166 kPa. After treatment, pots were returned to the greenhouse until ready for evaluation.

Treatments were made using dilute aqueous compositions. These could be prepared as spray compositions directly from their ingredients. or by dilution with water of preformulated concentrate compositions. All comparisons were made at equal glyphosate acid equivalent rates. The required degree of dilution for a glyphosate concentrate composition to make a plant treatment composition is calculated from the equation

$$A = RS/VC$$

where A is the volume in milliliters (ml) of the glyphosate composition to be added to the plant treatment composition being prepared, R is the desired glyphosate rate in grams of acid equivalent per hectare (g a.e./ha), S is the total volume in milliliters (ml) of plant treatment composition being prepared, V is the application rate in liters per hectare (l/ha) of plant treatment composition, conventionally referred to as "spray volume", and C is the concentration of glyphosate in grams of acid equivalent per liter (g a.e./l) in the glyphosate composition.

For evaluation of herbicidal effectiveness, all plants in the test were examined by a single practiced technician, who recorded percent inhibition, a visual measurement of the effectiveness of each treatment by comparison with untreated plants. Inhibition of 0% indicates no effect, and inhibition of 100% indicates that all of the plants are completely killed. Inhibition of 85% or more is in most cases considered acceptable for normal herbicidal use; however in greenhouse tests such as those of the Examples it is normal to include rates which give less than 85% inhibition, as this makes it easier to discriminate among compositions having different levels of effectiveness.

Example 1

Solid water-soluble granule compositions were prepared containing glyphosate ammonium salt. glufosinate ammonium salt and excipient ingredients as shown in Table 25a.

Compositions 25-01 to 25-06 were prepared by the procedure described below with the addition to the wet mix of glufosinate ammonium salt in the desired amount.

The selected surfactant or surfactants were first heated if necessary to bring them to a flowable state. Dry ammonium glyphosate powder (MON 8750 of Monsanto) was mixed with a small amount of water (typically about 5 g per 100 g of all other ingredients) and with the selected surfactant(s) to make a wet mix which was kneaded until a homogeneous smooth dough-like paste was produced. This paste was transferred to a radial extruder fitted with screens having 1 mm orifices and extruded through these orifices. The resulting strands of extrudate broke spontaneously to form short cylindrical granules which were then dried in a fluid bed dryer.

Surfactants used in the compositions of this Example were the alkylether surfactant Plurafac™ A-38 of BASF and amine surfactant A. Which is a polyoxyethylene (20) tallowamine.

Table 25a

| Granule composition | Weight % | | | |
|---|---|---|---|---|
| | Glyphosate a.e. | Glufosinate a.e. | Plurafac A-38 | amine surfactant A |
| 25-01 | 66.1 | 2.0 | | 21.0 |
| 25-02 | 66.1 | 2.0 | 10.5 | 10.5 |
| 25-03 | 66.1 | 2.0 | 5.3 | 15.7 |
| 25-04 | 65.0 | 3.0 | | 21.0 |
| 25-05 | 65.0 | 3.0 | 10.5 | 10.5 |
| 25-06 | 65.0 | 3.0 | 5.3 | 15.7 |

Velvetleaf (*Abutilon theophrasti*, ABUTH) and Japanese millet (*Echinochloa crus-galli*, ECHCF) plants were grown and treated by the standard procedures given above. Applications of plant treatment compositions were made 17 days after planting ABUTH and ECHCF. Evaluation of early symptom development was done 3 days after application (DAA), and evaluation of herbicidal effectiveness was done 17 days after application.

Roundup® Ultra was diluted and applied as a comparative treatment. Results. averaged for all replicates of each treatment. are shown in Table 25b.

Table 25b

| Concentrate composition | Glyphosate and glufosinate rates g a.e./ha | % Inhibition | | | |
|---|---|---|---|---|---|
| | | ABUTH | | ECHCF | |
| | | 3 DAA | 17 DAA | 3 DAA | 17 DAA |
| Roundup® Ultra | 100 + 0 | 0 | 34 | 0 | 37 |
| | 200 + 0 | 0 | 81 | 0 | 76 |
| | 400 + 0 | 0 | 97 | 0 | 93 |
| | 600 + 0 | 0 | 99 | 0 | 94 |
| 25-01 | 100 + 3 | 0 | 30 | 0 | 36 |
| | 200 + 6 | 0 | 76 | 0 | 75 |
| | 400 + 12 | 2 | 96 | 0 | 86 |
| | 600 + 18 | 14 | 98 | 6 | 93 |
| 25-02 | 100 + 3 | 0 | 71 | 0 | 44 |
| | 200 + 6 | 0 | 92 | 0 | 77 |
| | 400 + 12 | 10 | 95 | 1 | 88 |
| | 600 + 18 | 16 | 96 | 6 | 91 |
| 25-03 | 100 + 3 | 0 | 66 | 0 | 49 |
| | 200 + 6 | 0 | 89 | 0 | 81 |
| | 400 + 12 | 12 | 97 | 8 | 98 |
| | 600 + 18 | 17 | 99 | 14 | 93 |
| 25-04 | 100 + 4.5 | 0 | 32 | 0 | 35 |
| | 200 + 9 | 0 | 80 | 0 | 77 |
| | 400 + 18 | 12 | 92 | 4 | 83 |
| | 600 + 27 | 17 | 91 | 9 | 85 |

Table 25b (continued)

| Concentrate composition | Glyphosate and glufosinate rates g a.e./ha | % Inhibition | | | |
|---|---|---|---|---|---|
| | | ABUTH | | ECHCF | |
| | | 3 DAA | 17 DAA | 3 DAA | 17 DAA |
| 25-05 | 100 + 4.5 | 0 | 67 | 0 | 47 |
| | 200 + 9 | 5 | 86 | 0 | 75 |
| | 400 + 18 | 13 | 91 | 9 | 88 |
| | 600 + 27 | 20 | 94 | 17 | 92 |
| 25-06 | 100 + 4.5 | 0 | 70 | 0 | 53 |
| | 200 + 9 | 8 | 90 | 0 | 83 |
| | 400 + 18 | 14 | 91 | 11 | 85 |
| | 600 + 27 | 18 | 91 | 15 | 88 |

Compositions 25-02 and 25-03 of the invention gave superior herbicidal effectiveness to composition 25-01 which contained amine surfactant A but did not contain the alkylether surfactant Plurafac™ A-38. Likewise, compositions 25-05 and 25-06 of the invention gave superior herbicidal effectiveness to composition 25-04.

Example 26

Aqueous suspension concentrate compositions were prepared containing glyphosate isopropylammonium salt, oxyfluorfen and surfactants as shown in Table 26a. Surfactant J is the tallowamine-based surfactant used in formulating Roundup® Ultra.

Compositions 26-01 and 26-02 were prepared by the following procedure. A 10% by weight aqueous solution of Surfactant J was first prepared. To this solution in a wide-mouthed jar was added oxyfluorfen powder, technical grade (95%) in an amount calculated to provide a 41% by weight suspension of oxyfluorfen active ingredient (a.i.). The jar was then placed in an Eiger mill where the suspension was milled for 2 hours at 3000 rpm in a cooling bath at 10°C. Particle size analysis of the resulting milled oxyfluorfen showed a volume mean diameter of 2.5 µm and a volume median diameter of 1.7 µm. The surfactant. in this case Surfactant J. was present to facilitate the milling operation.

Glyphosate isopropylammonium salt in the form of MON 0139 (46% by weight glyphosate a.e.) was mixed with the 41% milled oxyfluorfen prepared as above in a weight ratio of glyphosate a.e. to oxyfluorfen a.i. of 12:1. (As the milled oxyfluorfen contained approximately 6% by weight Surfactant J. a small amount of this surfactant was contributed along with oxyfluorfen to the final composition: the amount is believed small enough to be negligible in affecting herbicidal effectiveness.) Also added were surfactants selected as shown in Table 26a, colloidal particulate silica (a blend of Aerosil™ 380 and Aerosil™ MOX-80 of Degussa), propylene glycol, sodium sulfite and water in the amounts listed below (percentages are by weight):

| | |
|---|---|
| MON 0139 (46% glyphosate a.e.) | 67.00% |
| oxyfluorfen (41% milled) | 6.30% |
| Aerosil™ 380 | 1.45% |
| Aerosil™ MOX-80 | 0.25% |
| surfactant(s) and coupling agent | (see Table 26a) |
| sodium sulfite | 0.20% |
| water | to 100.00% |

The above ingredients were thoroughly agitated for about 5 minutes or until a homogeneous suspension was formed. Ethoquad™ T/20 of Akzo is a polyoxyethylene quaternary tallowalkylmethylammonium chloride surfactant having an average of about 10 oxyethylene units per molecule. Plurafac™ A-38 of BASF is a polyoxyethylene $C_{16-18}$ alkylether having an average of about 27 oxyethylene units per molecule. Composition 26-01 was included for comparative purposes only.

Table 26a

| Concentrate composition | Weight % | | | | | |
|---|---|---|---|---|---|---|
| | Glyphosate a.e. | Oxyfluorfen a.i. | Plurafac A-38 | Ethoquad T/20 | Surfactant J[1] | Coupling agent |
| 26-01 | 30.8 | 2.6 | | | 14.5 | 0.2[2] |
| 26-02 | 30.8 | 2.6 | 3.0 | 7.0 | | 1.0[3] |

[1] excluding minor amount added to oxyfluorfen during milling
[2] monoethanolamine
[3] propylene glycol

Filaree (*Erodium* sp.. EROSS) and annual bluegrass (*Poa annua*. POAAN) plants were grown and treated by the standard procedures given above. Applications of plant treatment compositions were made 36 days after planting EROSS and POAAN. Evaluation of early symptom development was done 4 days after application (DAA). and evaluation of herbicidal effectiveness was done 20 days after application.

Roundup® Ultra was diluted and applied as a comparative treatment. both alone and in tank-mixture with Goal® 2XL herbicide of Rohm & Haas. an emulsifiable concentrate formulation of oxyfluorfen. The tank-mixture was prepared to give a 12:1 weight ratio of glyphosate a.e. to oxyfluorfen a.i. Results. averaged for all replicates of each treatment, are shown in Table 26b.

Table 26b

| Concentrate composition | Glyphosate and oxyfluorfen rates g a.e., a.i./ha | % Inhibition | | | |
|---|---|---|---|---|---|
| | | EROSS | | POAAN | |
| | | 4 DAA | 20 DAA | 4 DAA | 120 DAA |
| Roundup® Ultra | 400 + 0 | 0 | 57 | 0 | 50 |
| | 600 + 0 | 0 | 72 | 0 | 63 |
| | 800 + 0 | 3 | 93 | 0 | 78 |
| | 1000 + 0 | 8 | 93 | 2 | 88 |
| Roundup® Ultra + Goal® 2XL tank-mixture | 400 + 33 | 10 | 33 | 12 | 63 |
| | 600 + 50 | 17 | 45 | 13 | 65 |
| | 800 + 67 | 20 | 65 | 17 | 68 |
| | 1000 + 83 | 20 | 72 | 18 | 75 |
| 26-01 | 400 + 33 | 8 | 22 | 5 | 48 |
| | 600 + 50 | 18 | 53 | 10 | 73 |
| | 800 + 67 | 22 | 82 | 10 | 75 |
| | 1000 + 83 | 30 | 92 | 10 | 75 |
| 26-02 | 400 + 33 | 10 | 50 | 8 | 58 |
| | 600 + 50 | 15 | 60 | 8 | 68 |
| | 800 + 67 | 20 | 90 | 8 | 77 |
| | 1000 + 83 | 25 | 93 | 8 | 83 |

Significant antagonism to the herbicidal effectiveness of glyphosate, especially on EROSS. was seen in this test with addition of oxyfluorfen. Composition 26-02 of the invention gave greatly reduced antagonism by comparison with the tank-mixture and also showed less antagonism than composition 26-01.

Example 27

Solid water-dispersible granule compositions were prepared containing glyphosate ammonium salt, oxyfluorfen and surfactants as shown in Table 26a.

Compositions 27-01 and 27-02 were prepared by the following procedure. In a food mixer were blended dry ammonium glyphosate powder (MON 8750 of Monsanto), a small amount of water (about 5 g per 100 g of all other ingredients), surfactants and ammonium sulfate as shown in Table 27a, and 41% milled oxyfluorfen prepared as described in Example 26. The weight ratio of glyphosate a.e. to oxyfluorfen a.i. was 12:1. After thorough blending, the resulting wet mix was extruded and dried as described in Example 16.

Compositions 27-03 and 27-04 were prepared by a similar procedure except that oxyfluorfen (technical grade, 95%) was melted and added to the wet mix instead of 41% milled oxyfluorfen. The amount of water added was increased to 7-8 g per 100 g of all other ingredients.

Table 27a

| Granule composition | Weight % | | | | |
|---|---|---|---|---|---|
| | Glyphosate a.e. | Oxyfluorfen a.i. | Plurafac A-38 | Ethoquad T/20 | Ammonium sulfate |
| 27-01 | 37.0 | 3.1 | 6.25 | 6.25 | 40.5 |
| 27-02 | 37.0 | 3.1 | 3.12 | 9.38 | 40.5 |
| 27-03 | 37.0 | 3.1 | 6.25 | 6.25 | 40.5 |
| 27-04 | 37.0 | 3.1 | 3.12 | 9.38 | 40.5 |

Velvetleaf (*Abutilon theophrasti*, ABUTH) and Japanese millet (*Echinochloa crus-galli*, ECHCF) plants were grown and treated by the standard procedures given above. Applications of plant treatment compositions were made 18 days after planting ABUTH and ECHCF. Evaluation of early symptom development was done 2 days after application (DAA). and evaluation of herbicidal effectiveness was done 18 days after application.

Roundup® Ultra was diluted and applied as a comparative treatment. both alone and in tank-mixture with Goal® 2XL herbicide of Rohm & Haas. an emulsifiable concentrate formulation of oxytluorfen. The tank-mixture was prepared to give a 12:1 weight ratio of glyphosate a.e. to oxyfluorfen a.i. Also included in this test were compositions 26-01 (as a comparative treatment) and 26-02 of Example 26. Results, averaged for all replicates of each treatment, are shown in Table 27b.

Table 27b

| Concentrate composition | Glyphosate and oxytluorfen rates g a.e.. a.i./ha | % Inhibition | | | |
|---|---|---|---|---|---|
| | | ABUTH | | ECHCF | |
| | | 2 DAA | 18 DAA | 2 DAA | 18 DAA |
| Roundup® Ultra | 100 + 0 | 0 | 53 | 0 | 37 |
| | 200 + 0 | 0 | 83 | 0 | 72 |
| | 400 + 0 | 0 | 96 | 0 | 78 |
| | 600 + 0 | 0 | 100 | 0 | 87 |
| Roundup® Ultra + Goal® 2XL tank-mixture | 100 + 8 | 12 | 17 | 8 | 10 |
| | 200 + 17 | 18 | 57 | 12 | 70 |
| | 400 + 33 | 27 | 72 | 18 | 77 |
| | 600 + 50 | 32 | 77 | 25 | 82 |

Table 27b (continued)

| Concentrate composition | Glyphosate and oxytluorfen rates g a.e.. a.i./ha | % Inhibition | | | |
|---|---|---|---|---|---|
| | | ABUTH | | ECHCF | |
| | | 2 DAA | 18 DAA | 2 DAA | 18 DAA |
| 26-01 | 100 + 8 | 10 | 47 | 7 | 30 |
| | 200 + 17 | 15 | 70 | 10 | 73 |
| | 400 + 33 | 18 | 85 | 17 | 78 |
| | 600 + 50 | 20 | 87 | 18 | 87 |
| 26-02 | 100 + 8 | 8 | 70 | 7 | 70 |
| | 200 + 17 | 13 | 90 | 10 | 75 |
| | 400 + 33 | 15 | 98 | 13 | 82 |
| | 600 + 50 | 17 | 99 | 20 | 90 |
| 27-01 | 100 + 8 | 7 | 53 | 5 | 68 |
| | 200 + 17 | 12 | 78 | 7 | 75 |
| | 400 + 33 | 13 | 88 | 12 | 82 |
| | 600 + 50 | 18 | 90 | 17 | 94 |
| 27-02 | 100 + 8 | 5 | 67 | 5 | 72 |
| | 200 + 17 | 8 | 83 | 12 | 75 |
| | 400 + 33 | 12 | 95 | 15 | 85 |
| | 600 + 50 | 15 | 96 | 15 | 90 |
| 27-03 | 100 + 8 | 10 | 45 | 3 | 65 |
| | 200 + 17 | 18 | 78 | 10 | 75 |
| | 400 + 33 | 22 | 85 | 15 | 80 |
| | 600 + 50 | 22 | 93 | 18 | 83 |
| 27-04 | 100 + 8 | 7 | 80 | 3 | 72 |
| | 200 + 17 | 10 | 90 | 10 | 75 |
| | 400 + 33 | 13 | 98 | 12 | 82 |
| | 600 + 50 | 15 | 99 | 17 | 89 |

Significant antagonism to the herbicidal effectiveness of glyphosate, especially on ABUTH, was seen in this test with addition of oxyfluorfen. Compositions 26-02 and 27-01 to 27-04 of the invention gave greatly reduced antagonism by comparison with the tank-mixture and also showed less antagonism than composition 26-01.

## Claims

**1.** A concentrate herbicidal composition, comprising

(a) about 10% to about 90% by weight, expressed as acid equivalent, of a first herbicide that is anionic;
(b) a second herbicide in an amount effective to elicit a visible symptom of phytotoxicity in a plant within about 4 days after application to foliage of the plant;
(c) an alkylether surfactant component consisting of one or more surfactants each having the formula (I)

$$R^{12}\text{-O-}(CH_2CH_2O)_n((CHR)_2O)_m\text{-}R^{13} \quad \text{(I)}$$

wherein $R^{12}$ is a linear aliphatic saturated or unsaturated hydrocarbyl group having about 16 to about 22 carbon atoms, n is an average number of about 10 to about 100, m is an average number of 0 to about 5, one R in each -$((CHR)_2O)$- group is hydrogen and the other R is methyl, and $R^{13}$ is a hydrogen, $C_{1-4}$ alkyl or $C_{2-4}$ acyl group; and
(d) an amine surfactant component consisting of one or more surfactants each having a molecular structure that comprises

(1) a hydrophobic moiety having one or a plurality of independently saturated or unsaturated, branched or unbranched, aliphatic, alicyclic or aromatic $C_{3-20}$ hydrocarbyl or hydrocarbylene groups joined together by 0 to about 7 ether linkages and having in total about 8 to about 24 carbon atoms, and
(2) a hydrophilic moiety comprising an amino group that is cationic or that can be protonated to become cationic, having attached directly thereto 1 to 3 oxyethylene groups or polyoxyethylene chains, these oxyethylene groups and polyoxyethylene chains comprising on average 1 to about 50 oxyethylene units per surfactant molecule, the hydrophobic moiety being attached either to the amino group or via an ether linkage to an oxyethylene unit;

wherein the weight ratio of the alkylether surfactant component to the amine surfactant component is about 1:10 to about 10:1; and wherein the alkylether and amine surfactant components are present in total in an adjuvant amount of about 0.05 to about 0.5 parts by weight per part by weight of the first herbicide, expressed as acid equivalent.

2. The concentrate composition of Claim 1 that is liquid and comprises about 10% to about 50% by weight, expressed as acid equivalent, of the first herbicide.

3. The concentrate composition of Claim 1 that is solid and comprises about 25% to about 75% by weight, expressed as acid equivalent, of the first herbicide.

4. The concentrate composition of Claim 1 wherein the first herbicide is a glyphosate herbicide.

5. The concentrate composition of Claim 4 wherein the glyphosate is present predominantly in the form of a water-soluble salt having a cationic counterion of molecular weight lower than about 100, or a mixture of such salts.

6. The concentrate composition of Claim 5 wherein the cationic counterion is selected from sodium, potassium, ammonium, dimethylammonium, isopropylammonium, monoethanolammonium and trimethylsulfonium cations.

7. The concentrate composition of Claim 1 wherein the second herbicide is glufosinate or a salt thereof.

8. The concentrate composition of Claim 7 wherein the first herbicide is glyphosate or a salt thereof and the acid equivalent ratio of glufosinate to glyphosate is about 1:1 to about 1:30 by weight.

9. The concentrate composition of Claim 8 wherein the acid equivalent ratio of glufosinate to glyphosate is about 1:2 to about 1:20 by weight.

10. The concentrate composition of Claim 1 wherein the second herbicide is selected from carfentrazone-ethyl, flumiclorac-pentyl, flumioxazin, fluoroglycofen-ethyl, fomesafen, lactofen and oxyfluorfen.

11. The concentrate composition of Claim 10 wherein the first herbicide is glyphosate or a salt thereof and the ratio of the second herbicide to glyphosate, expressed as acid equivalent, is about 1:1 to about 1:250 by weight.

12. The concentrate composition of Claim 1 wherein, in formula (I) for the alkylether surfactant component, $R^{12}$ is a linear $C_{16}$ or $C_{18}$ alkyl, alkenyl or alkadienyl group, or the alkylether surfactant component is a mixture of surfactants having various such $R^{12}$ groups or is derived from a natural oil or fat.

13. The concentrate composition of Claim 1 wherein, in formula (I) for the alkylether surfactant component, n is about

10 to about 50, m is 0 and $R^{13}$ is hydrogen.

**14.** The concentrate composition of Claim 13 wherein, in formula (I) for the alkylether surfactant component, n is about 10 to about 40.

**15.** The concentrate composition of Claim 1 wherein the amine surfactant component comprises one or more surfactants each having, at a pH of about 4, the formula (II)

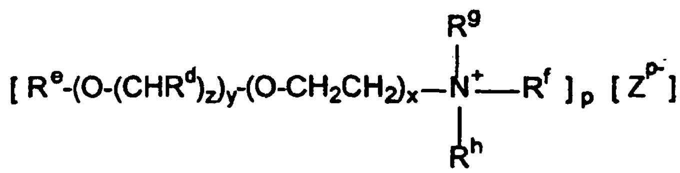

(II)

or the formula (III)

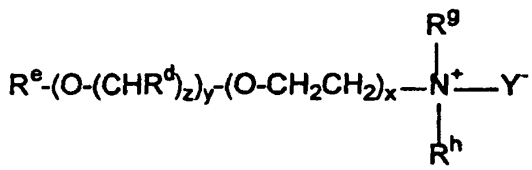

(III)

or the formula (IV)

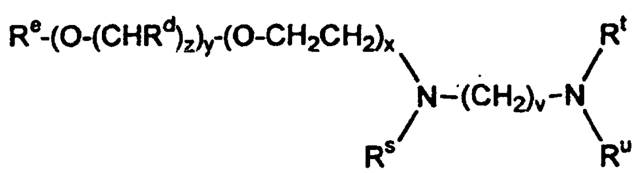

(IV)

where, in formulas (II), (III) and (IV):

$R^e$ is hydrogen or a linear or branched $C_{8-20}$ aliphatic hydrocarbyl group;
each z is independently 2 or 3;
each $R^d$ is hydrogen or methyl whereby if z is 2 at least one $R^d$ in the two -($CHR^d$)- groups is methyl;
y is 0 to 7 such that the total number of carbon atoms in the group $R^e$-(O-($CHR^d$)$_z$)$_y$- is 8 to 24;
x is 0 to 5;
$R^f$ is hydrogen, $C_{1-4}$ alkyl or benzyl;
$R^g$ is $C_{1-4}$ alkyl or -($CH_2CH_2$-O)$_{x'}$$R^c$ and $R^h$ is $C_{1-4}$ alkyl or -($CH_2CH_2$-O)$_x$-$R^c$, where $R^c$ is hydrogen, $C_{1-4}$ alkyl or $C_{2-4}$ acyl and x' and x" are average numbers such that x + x' + x" is 1 to about 50;
$Z^{p-}$ is a suitable anion and p is 1 or 2;
$Y^-$ is an anionic group selected from -$O^-$, -($CHR^b$)$_w$-$COO^-$ and -($CHR^b$)$_w$-$SO_3^-$ where w is 1 to 3 and each $R^b$ is independently hydrogen, hydroxyl, $C_{1-4}$ alkyl or hydroxy-($C_{1-4}$ alkyl);
v is a number from 2 to 6; and
$R^s$, $R^t$ and $R^u$ are independently $C_{1-4}$ alkyl or -($CH_2CH_2$-O)$_k$$R^c$ where $R^c$ is hydrogen, $C_{1-4}$ alkyl or $C_{2-4}$ acyl and each k is an average number such that the total number of -($CH_2CH_2$-O) units in a molecule of the amine surfactant is 1 to about 50.

**16.** The concentrate composition of Claim 15 wherein the amine surfactant component comprises one or more surfactants of formula (II) selected from polyoxyethylene alkylamines, polyoxyethylene alkyletheramines, polyoxyethylene N-methyl alkylammonium salts, polyoxyethylene N-methyl alkyletherammonium salts and polyoxypropylene quaternary ammonium salts.

**17.** The concentrate composition of Claim 15 wherein the amine surfactant component comprises one or more polyoxyethylene (2-20) $C_{12-18}$ alkylamines and/or alkylammonium chlorides.

**18.** The concentrate composition of Claim 15 wherein the amine surfactant component comprises one or more surfactants of formula (III) selected from polyoxyethylene alkylamine oxides and polyoxyethylene alkyletheramine oxides.

**19.** The concentrate composition of Claim 1 wherein the ratio of the alkylether surfactant component to the amine surfactant component is about 1:5 to about 5:1 by weight.

**20.** The concentrate composition of Claim 1 wherein the ratio of the alkylether surfactant component to the amine surfactant component is about 1:3 to about 3:1 by weight.

**21.** The concentrate composition of Claim 1 wherein the ratio of surfactant to the first herbicide, expressed as acid equivalent, is about 0.1:1 to about 0.4:1 by weight.

**22.** A plant treatment composition, comprising

(a) water, having dissolved or dispersed therein
(b) a first herbicide that is anionic, in a herbicidally effective amount;
(c) a second herbicide in an amount effective to elicit a visible symptom of phytotoxicity in a plant within about 4 days after application to foliage of the plant;
(d) an alkylether surfactant component consisting of one or more surfactants each having the formula (I)

$$R^{12}\text{-O-}(CH_2CH_2O)_n((CHR)_2O)_m\text{-}R^{13} \quad (I)$$

wherein $R^{12}$ is a linear aliphatic saturated or unsaturated hydrocarbyl group having about 16 to about 22 carbon atoms, n is an average number of about 10 to about 100, m is an average number of 0 to about 5, one R in each $-((CHR)_2O)-$ group is hydrogen and the other R is methyl, and $R^{13}$ is a hydrogen, $C_{1-4}$ alkyl or $C_{2-4}$ acyl group; and
(e) an amine surfactant component consisting of one or more surfactants each having a molecular structure that comprises

(1) a hydrophobic moiety having one or a plurality of independently saturated or unsaturated, branched or unbranched, aliphatic, alicyclic or aromatic $C_{3-20}$ hydrocarbyl or hydrocarbylene groups joined together by 0 to about 7 ether linkages and having in total about 8 to about 24 carbon atoms, and
(2) a hydrophilic moiety comprising an amino group that is cationic or that can be protonated to become cationic, having attached directly thereto 1 to 3 oxyethylene groups or polyoxyethylene chains, these oxyethylene groups and polyoxyethylene chains comprising on average 1 to about 50 oxyethylene units per surfactant molecule, the hydrophobic moiety being attached either to the amino group or via an ether linkage to an oxyethylene unit;

wherein the weight ratio of the alkylether surfactant component to the amine surfactant component is about 1:10 to about 10:1; and wherein the alkylether and amine surfactant components are present in total in an adjuvant amount of about 0.05 to about 0.5 parts by weight per part by weight of the first herbicide, expressed as acid equivalent.

**23.** The plant treatment composition of Claim 22 wherein the first herbicide is a glyphosate herbicide.

**24.** The plant treatment composition of Claim 23 wherein the glyphosate is present predominantly in the form of a water-soluble salt having a cationic counterion of molecular weight lower than about 100, or a mixture of such salts.

**25.** The plant treatment composition of Claim 24 wherein the cationic counterion is selected from sodium, potassium, ammonium, dimethylammonium, isopropylammonium, monoethanolammonium and trimethylsulfonium cations.

**26.** the plant treatment composition of Claim 22 wherein the second herbicide is glufosinate or a salt thereof.

**27.** The plant treatment composition of Claim 26 wherein the first herbicide is glyphosate or a salt thereof and the acid equivalent ratio of glufosinate to glyphosate is about 1:1 to about 1:30 by weight.

**28.** The plant treatment composition of Claim 27 wherein the acid equivalent ratio of glufosinate to glyphosate is about 1:2 to about 1:20 by weight.

**29.** The plant treatment composition of Claim 22 wherein the second herbicide is selected from carfentrazone-ethyl, flumiclorac-pentyl, flumioxazin, fluoroglycofen-ethyl, fomesafen, lactofen and oxyfluorfen.

**30.** The plant treatment composition of Claim 29 wherein the first herbicide is glyphosate or a salt thereof and the ratio of the second herbicide to glyphosate, expressed as acid equivalent, is about 1:1 to about 1:250 by weight.

**31.** The plant treatment composition of Claim 22 wherein, in formula (I) for the alkylether surfactant component, $R^{12}$ is a linear $C_{16}$ or $C_{18}$ alkyl, alkenyl or alkadienyl group, or the alkylether surfactant component is a mixture of surfactants having various such $R^{12}$ groups or is derived from a natural oil or fat.

**32.** The plant treatment composition of Claim 22 wherein, in formula (I) for the alkylether surfactant component, n is about 10 to about 50, m is 0 and $R^{13}$ is hydrogen.

**33.** The plant treatment composition of Claim 32 wherein, in formula (I) for the alkylether surfactant component, n is about 10 to about 40.

**34.** The plant treatment composition of Claim 22 wherein the amine surfactant component comprises one or more surfactants each having, at a pH of about 4, the formula (II)

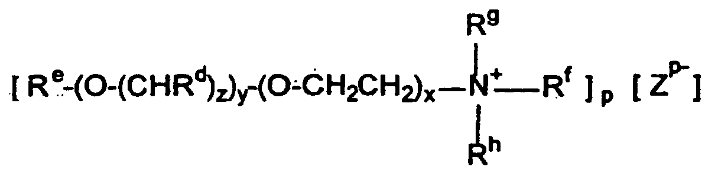

(II)

or the formula (III)

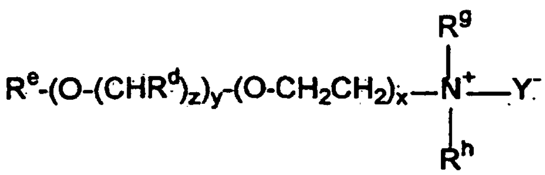

(III)

or the formula (IV)

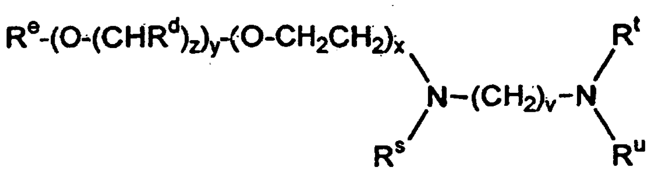

(IV)

where, in formulas (II), (III) and (IV):

$R^e$ is hydrogen or a linear or branched $C_{8-20}$ aliphatic hydrocarbyl group;
each z is independently 2 or 3;
each $R^d$ is hydrogen or methyl whereby if z is 2 at least one $R^d$ in the two -($CHR^d$)- groups is methyl;
y is 0 to 7 such that the total number of carbon atoms in the group $R^e$-(O-($CHR^d$)$_z$)$_y$- is 8 to 24;

x is 0 to 5;
$R^f$ is hydrogen, $C_{1-4}$ alkyl or benzyl;
$R^8$ is $C_{1-4}$ alkyl or $-(CH_2CH_2-O)_{x'}R^c$ and $R^h$ is $C_{1-4}$ alkyl or $-(CH_2CH_2-O)_{x''}R^c$, where $R^c$ is hydrogen, $C_{1-4}$ alkyl or $C_{2-4}$ acyl and x' and x" are average numbers such that x + x' + x" is 1 to about 50;
$Z^{p-}$ is a suitable anion and p is 1 or 2;
$Y^-$ is an anionic group selected from $-O^-$, $-(CHR^b)_w-COO^-$ and $-(CHR^b)_w-SO_3^-$ where w is 1 to 3 and each $R^b$ is independently hydrogen, hydroxyl, $C_{1-4}$ alkyl or hydroxy-($C_{1-4}$ alkyl);
v is a number from 2 to 6; and
$R^s$, $R^t$ and $R^u$ are independently $C_{1-4}$ alkyl or $-(CH_2CH_2-O)_kR^c$ where $R^c$ is hydrogen, $C_{1-4}$ alkyl or $C_{2-4}$ acyl and each k is an average number such that the total number of $-(CH_2CH_2-O)$ units in a molecule of the amine surfactant is 1 to about 50.

**35.** The plant treatment composition of Claim 34 wherein the amine surfactant component comprises one or more surfactants of formula (II) selected from polyoxyethylene alkylamines, polyoxyethylene alkyletheramines, polyoxyethylene N-methyl alkylammonium salts, polyoxyethylene N-methyl alkyletherammonium salts and polyoxypropylene quaternary ammonium salts.

**36.** The plant treatment composition of Claim 34 wherein the amine surfactant component comprises one or more polyoxyethylene (2-20) $C_{12-18}$ alkylamines and/or alkylammonium chlorides.

**37.** The plant treatment composition of Claim 34 wherein the amine surfactant component comprises one or more surfactants of formula (III) selected from polyoxyethylene alkylamine oxides and polyoxyethylene alkyletheramine oxides.

**38.** The plant treatment composition of Claim 22 wherein the ratio of the alkylether surfactant component to the amine surfactant component is about 1:5 to about 5:1 by weight.

**39.** The plant treatment composition of Claim 22 wherein the ratio of the alkylether surfactant component to the amine surfactant component is about 1:3 to about 3:1 by weight.

**40.** The plant treatment composition of Claim 22 wherein the ratio of surfactant to the first herbicide, expressed as acid equivalent, is about 0.1:1 to about 0.4:1 by weight.

**41.** A method for killing or controlling growth of a plant, comprising applying a plant treatment composition of any of Claims 22-40 to foliage of the plant. GB-2 267 825 discloses herbicidal glyphosate compositions that comprise rather high amounts of surfactant and show total surfactant-to-glyphosate ratios greater than 0.5. Also, in the case of alkylethers, the alkyl chain length is below 16 c-atoms and the ethoxylation degree is reduced.

## Patentansprüche

**1.** Herbizidkonzentratzusammensetzung, umfassend

(a) etwa 10 bis etwa 90 Gew.-%, ausgedrückt als Säureäquivalent, eines ersten Herbizids, das anionisch ist:
(b) ein zweites Herbizid in einer wirksamen Menge. um ein sichtbares Symptom der Phytotoxizität in einer Pflanze innerhalb etwa 4 Tagen nach Aufbringung auf das Blattwerk der Pflanze hervorzurufen;
(c) eine Alkylether-Tensidkomponente, bestehend aus einem oder mehreren Tensiden mit jeweils der Formel (I)

$$R^{12}\text{-O-}(CH_2CH_2O)_n((CHR)_2O)_m\text{-}R^{13} \quad (I)$$

worin $R^{12}$ eine lineare aliphatische, gesättigte oder ungesättigte Hydrocarbylgruppe mit etwa 16 bis etwa 22 Kohlenstoffatomen ist, n eine Durchschnittszahl von etwa 10 bis etwa 100 ist, m eine Durchschnittszahl von 0 bis etwa 5 ist, ein R in jeder $-((CHR)_2O)$-Gruppe Wasserstoff und das andere R Methyl ist, und $R^{13}$ Wasserstoff, eine $C_{1-4}$-Alkyl- oder $C_{2-4}$-Acylgruppe ist; und
(d) eine Amin-Tensidkomponente, bestehend aus einem oder mehreren Tensiden, die jeweils eine Molekularstruktur aufweisen, welche umfasst

(1) eine hydrophobe Einheit mit einer oder einer Vielzahl unabhängig voneinander gesättigter oder ungesättigter, verzweigter oder unverzweigter, aliphatischer, alicyclischer oder armonatischer $C_{3-20}$-Hydrocarbyl- oder Hydrocarbylengruppen, die durch 0 bis etwa 7 Etherbindungen miteinander verbunden sind und insgesamt etwa 8 bis etwa 24 Kohlenstoffatome besitzen, und
(2) eine hydrophile Einheit, umfassend eine Aminogruppe, welche kationisch ist oder welche protoniert werden kann, um kationisch zu werden, mit direkt daran gebundenen 1 bis 3 Oxyethylengruppen oder Polyoxyethylenketten, wobei diese Oxyethylengruppen und Polyoxyethylenketten im Durchschnitt 1 bis etwa 50 Oxyethyleneinheiten pro Tensidmolekül umfassen, wobei die hydrophobe Einheit entweder an die Aminogruppe oder über eine Etherbindung an eine Oxyethyleneinheit gebunden ist;

wobei das Gewichtsverhältnis der Alkylether-Tensidkomponente zu der Amin-Tensidkomponente etwa 1:10 bis etwa 10:1 beträgt; und wobei die Alkyletherund Amin-Tensidkomponenten insgesamt in einer Zusatzmenge von etwa 0,05 bis etwa 0,5 Gewichtsteilen pro Gewiehtateil des ersten Herbizids, ausgedrückt als Säureäquivalent, vorliegen.

**2.** Konzentratzusammensetzung nach Anspruch 1, welche flüssig ist und etwa 10 bis etwa 50 Gew.-%, ausgedrückt als Säureäquivalent, des ersten Herbizids umfasst.

**3.** Konzentratzusammensetzung nach Anspruch 1, welche fest ist und etwa 25 bis etwa 75 Gew.-%, ausgedrückt als Säureäquivalent, des ersten Herbizids umfasst.

**4.** Konzentratzusammensetzung nach Anspruch 1, wobei das erste Herbizid ein Glyphosat-Herbizid ist.

**5.** Konzentratzusammensetzung nach Anspruch 4, wobei das Glyphosat vorwiegend in Form eines wasserlöslichen Salzes, das ein kationisches Gegenion mit einem Molekulargewicht von weniger als 100 besitzt, oder einer Mischung solcher Salze vorliegt.

**6.** Konzentratzusammensetzung nach Anspruch 5, wobei das kationische Gegenion aus Natrium-. Kalium-, Ammonium-, Dimethylammonium-, Isopropylammonium-, Monoethanolammonium- und Trimethylsulfoniumkationen gewählt ist.

**7.** Konzentratzusammensetzung nach Anspruch 1, wobei das zweite Herbizid Glufosinat oder ein Salz hiervon ist.

**8.** Konzentratzusammensetzung nach Anspruch 7, wobei das erste Herbizid Glufosat oder ein Salz hiervon ist und das Säureaquivalentverhältnis von Glyphosinat zu Glyphosat etwa 1:1 bis etwa 1:30, bezogen auf Gewicht, beträgt.

**9.** Konzentratzusammensetzung nach Anspruch 8, wobei das Säureäquivalentverhältnis von Glufosinat zu Glyphosat etwa 1:2 bis etwa 1:20, bezogen auf Gewicht, beträgt.

**10.** Konzentratzusammensetzung nach Anspruch 1, wobei das zweite Herbizid aus Carfentrazon-Ethyl, Flumiclorac-Pentyl, Flumioxazin, Fluoroglycofen-Ethyl, Fomesafen, Lactofen und Oxyfluorfen gewählt ist.

**11.** Konzentratzusammensetzung nach Anspruch 10, wobei das erste Herbizid Glyphosat oder ein Salz hiervon ist und das Verhältnis des zweiten Herbizids zu Glyphosat, ausgedrückt als Säureäquivalent, etwa 1:1 bis etwa 1:250, bezogen auf Gewicht, beträgt.

**12.** Konzentratzusammensetzung nach Anspruch 1, wobei in Formel (I) für die Alkylether-Tensidkomponente, $R^{12}$ eine lineare $C_{16}$- oder $C_{18}$-Alkyl-, Alkenyl- oder Alkadienylgruppe ist, oder die Alkylether-Tensidkomponente eine Mischung aus Tensiden mit verschiedenen solchen $R^{12}$-Gruppen ist, oder von einem natürlichen Öl oder Fett abgeleitet ist.

**13.** Konzentratzusammensetzung nach Anspruch 1, wobei in Formel (I) für die Alkylether-Tensidkomponente n etwa 10 bis etwa 50 ist, m 0 ist und $R^{13}$ Wasserstoff ist.

**14.** Konzentratzusammensetzung nach Anspruch 13, wobei in Formel (I) für die Alkylether-Tensidkomponente n etwa 10 bis etwa 40 ist.

**15.** Konzentratzusammensetzung nach Anspruch 1, wobei die Amin-Tensidkomponente ein oder mehrere Tenside umfasst, von denen jedes bei einem pH von etwa 4 die Formel (II)

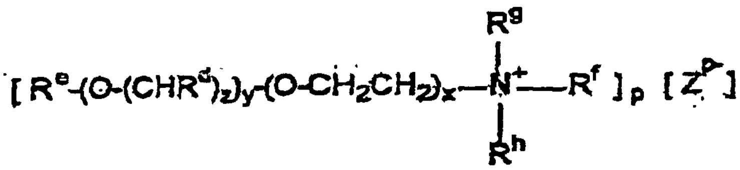

(II)

oder die Formel (III)

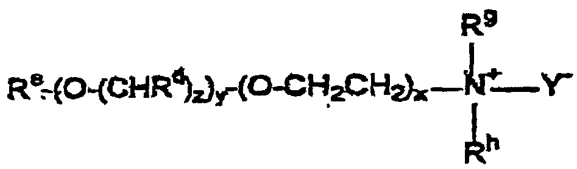

(III)

oder die Formel (IV)

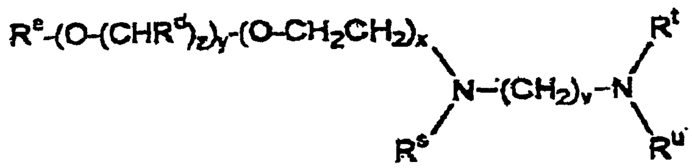

(IV)

aufweist, worin in den Formeln (II), (III) und (IV):

$R^e$ Wasserstoff oder eine lineare oder verzweigte, aliphatische $C_{8-20}$-Hydrocarbylgruppe ist;
jedes z unabhängig 2 oder 3 ist;
jedes $R^d$ Wasserstoff oder Methyl ist, wobei, wenn z 2 ist, mindestens ein $R^d$ in den zwei -($CHR^d$)-Gruppen Methyl ist;
y 0 bis 7 ist, so dass die Gesamtanzahl an Kohlenstoffatomen in der Gruppe $R^e$-(O-($CHR^d$)$_z$)$_y$- 8 bis 24 beträgt;
x 0 bis 5 ist;
$R^f$ Wasserstoff, $C_{1-4}$-Alkyl oder Benzyl ist;
$R^g$ $C_{1-4}$-Alkyl oder -($CH_2CH_2$-O)$_{x'}R^c$ ist und $R^h$ $C_{1-4}$-Alkyl oder -($CH_2CH_2$-O)$_{x''}R^c$ ist, worin $R^c$ Wasserstoff, $C_{1-4}$-Alkyl oder $C_{2-4}$-Acyl ist und x' und x" Durchschnittszahlen sind, so dass x + x' + x" 1 bis etwa 50 ist;
$Z^{p-}$ ein geeignetes Anion ist und p 1 oder 2 ist;
$Y^-$ eine anionische Gruppe ist, gewählt aus $-O^-$, -($CHR^b$)$_w$-$COO^-$ und -($CHR^b$)$_w$-$SO_3^-$, worin w 1 bis 3 ist und jedes $R^b$ unabhängig Wasserstoff, Hydroxyl, $C_{1-4}$-Alkyl oder Hydroxy-($C_{1-4}$-Alkyl) ist;
v eine Zahl von 2 bis 6 ist; und
$R^s$, $R^t$ und $R^u$ unabhängig voneinander $C_{1-4}$-Alkyl oder -($CH_2CH_2$-O)$_k R^c$ ist, worin $R^c$ Wasserstoff, $C_{1-4}$-Alkyl oder $C_{2-4}$-Acyl ist und jedes k eine Durchschnittszahl ist, so dass die Gesamtanzahl an -($CH_2CH_2$-O)-Einheiten in einem Molekül des Amin-Tensids 1 bis etwa 50 beträgt.

**16.** Konzentratzusammensetzung nach Anspruch 15, wobei die Amin-Tensidkomponente ein oder mehrere Tenside der Formel (II) umfasst, gewählt aus Polyoxyethylenalkylaminen, Polyoxyethylenalkyletheraminen, Polyoxyethylen-N-methylalkylammoniumsalzen, Polyoxyethylen-N-methylalkyletherammoniumsalzen und quaternären Polyoxypropylenammoniumsalzen.

**17.** Konzentratzusammensetzung nach Anspruch 15, wobei die Amin-Tensidkomponente ein oder mehrere Polyoxyethylen (2-20) $C_{12-18}$-alkylamine und/oder Alkylammoniumchoride umfasst.

**18.** Konzentratzusammensetzung nach Anspruch 15, wobei die Amin-Tensidkomponente ein oder mehrere Tenside der Formel (III) umfasst, gewählt aus Polyoxyethylenalkylaminoxiden und Polyoxyethylenalkyletheraminoxiden.

**19.** Konzentratzusammensetzung nach Anspruch 1, wobei das Verhältnis der Alkylether-Tensidkomponente zu der Amin-Tensidkomponente etwa 1:5 bis etwa 5:1, bezogen auf Gewicht, beträgt.

**20.** Konzentratzusammensetzung nach Anspruch 1, wobei das Verhältnis der Alkylether-Tensidkomponente zu der Amin-Tensidkomponente etwa 1:3 bis etwa 3:1, bezogen auf Gewicht, beträgt.

**21.** Konzentratzusammensetzung nach Anspruch 1, wobei das Verhältnis von Tensid zu dem ersten Herbizid, ausgedrückt als Säureäquivalent, etwa 0,1:1 bis etwa 0,4:1, bezogen auf Gewicht, beträgt.

**22.** Pflanzenbehandlungszusammensetzung, umfassend

(a) Wasser, das darin gelöst oder dispergiert aufweist
(b) ein erstes Herbizid, das anionisch ist, in einer herbizid-wirksamen Menge;
(c) ein zweites Herbizid in einer wirksamen Menge, um ein sichtbares Symptom der Phytotoxizität in einer Pflanze innerhalb etwa 4 Tagen nach Aufbringung auf das Blattwerk der Pflanze hervorzurufen;
(d) eine Alkylether-Tensidkomponente, bestehend aus einem oder mehreren Tensiden mit jeweils der Formel (I)

$$R^{12}\text{-O-}(CH_2CH_2O)_n((CHR)_2O)_m\text{-}R^{13} \quad \text{(I)}$$

worin $R^{12}$ eine lineare aliphatische, gesättigte oder ungesättigte Hydrocarbylgruppe mit etwa 16 bis etwa 22 Kohlenstoffatomen ist, n eine Durchschnittszahl von etwa 10 bis etwa 100 ist, m eine Durchschnittszahl von 0 bis etwa 5 ist, ein R in jeder $-((CHR)_2O)$-Gruppe Wasserstoff und das andere R Methyl ist, und $R^{13}$ Wasserstoff, eine $C_{1-4}$-Alkyl- oder $C_{2-4}$-Acylgruppe ist; und
(d) eine Amin-Tensidkomponente, bestehend aus einem oder mehreren Tensiden, die jeweils eine Molekularstruktur aufweisen, welche umfasst

(1) eine hydrophobe Einheit mit einer oder einer Vielzahl unabhängig voneinander gesättigter oder ungesättigter, verzweigter oder unverzweigter, aliphatischer, alicyclischer oder armonatischer $C_{3-20}$-Hydrocarbyl- oder Hydrocarbylengruppen, die durch 0 bis etwa 7 Etherbindungen miteinander verbunden sind und insgesamt etwa 8 bis etwa 24 Kohlenstoffatome besitzen, und
(2) eine hydrophile Einheit, umfassend eine Aminogruppe, welche kationisch ist oder welche protoniert werden kann, um kationisch zu werden, mit direkt daran gebundenen 1 bis 3 Oxyethylengruppen oder Polyoxyethylenketten, wobei diese Oxyethylengruppen und Polyoxyethylenketten im Durchschnitt 1 bis etwa 50 Oxyethyleneinheiten pro Tensidmolekül umfassen, wobei die hydrophobe Einheit entweder an die Aminogruppe oder über eine Etherbindung an eine Oxyethyleneinheit gebunden ist;

wobei das Gewichtsverhältnis der Alkylether-Tensidkomponente zu der Amin-Tensidkomponente etwa 1:10 bis etwa 10:1 beträgt; und wobei die Alkyletherund Amin-Tensidkomponenten insgesamt in einer Zusatzmenge von etwa 0,05 bis etwa 0,5 Gewichtatellen pro Gewichtsteil des ersten Herbizids, ausgedrückt als Säureäquivalent, vorliegen.

**23.** Pflanzenbehandlungszusammensetzung nach Anspruch 22, wobei das erste Herbizid ein Glyphosat-Herbizid ist.

**24.** Pflanzenbehandlungszusammensetzung nach Anspruch 23, wobei das Glyphosat vorwiegend in Form eines wasserlöslichen Salzes mit einem kationischen Gegenion mit einem Molekulargewicht von weniger als etwa 100, oder als eine Mischung solcher Salze, vorliegt.

**25.** Pflanzenbehandlungszusammensetzung nach Anspruch 24, wobei das kationische Gegenion aus Natrium-, Kalium-, Ammonium-, Dimethylammonium-, Isopropylammonium-, Monoethanolammonium- und Trimethylsulfoniumkationen gewählt ist.

**26.** Pflanzenbehandlungszusammensetzung nach Anspruch 22, wobei das zweite Herbizid Glufosinat oder ein Salz

hiervon ist.

**27.** Pflanzenbehandlungszusammensetzung nach Anspruch 26, wobei das erste Herbizid Glyphosat oder ein Salz hiervon ist und das Säureäquivalentverhältnis von Glufosinat zu Glyphosat etwa 1:1 bis etwa 1:30, bezogen auf Gewicht, beträgt.

**28.** Pflanzenbehandlungszusammensetzung nach Anspruch 27, wobei das Säureäquivalentverhältnis von Glufosinat zu Glyphosat etwa 1:2 bis etwa 1:20, bezogen auf Gewicht, beträgt.

**29.** Pflanzenbehandlungszusammensetzung nach Anspruch 22, wobei das zweite Herbizid aus Carfentrazon-Ethyl, Flumiclorac-Pentyl, Flumioxazin, Fluoroglycofen-Ethyl, Fomesafen, Lactofen und Oxyfluorfen gewählt ist.

**30.** Pflanzenbehandlungszusammensetzung nach Anspruch 29, wobei das erste Herbizid Glyphosat oder ein Salz hiervon ist und das Verhältnis des zweiten Herbizids zu Glyphosat, ausgedrückt als Säureäquivalent, etwa 1:1 bis etwa 1:250, bezogen auf Gewicht, beträgt.

**31.** Pflanzenbehandlungszusammensetzung nach Anspruch 22, wobei in Formel (I) für die Alkylether-Tensidkomponente, $R^{12}$ eine lineare $C_{16}$- oder $C_{18}$-Alkyl-, Alkenyl- oder Alkadienylgruppe ist, oder die Alkylether-Tensidkomponente eine Mischung aus Tensiden mit verschiedenen solchen $R^{12}$-Gruppen ist, oder von einem naturlichen Öl oder Fett abgeleitet ist.

**32.** Pflanzenbehandlungszusammensetzung nach Anspruch 22, wobei in Formel (I) für die Alkylether-Tensidkomponente n etwa 10 bis etwa 50 ist, m 0 ist und $R^{13}$ Wasserstoff ist.

**33.** Pflanzenbehandlungszusammensetzung nach Anspruch 32, wobei in Formel (I) für die Alkylether-Tensidkomponente n etwa 10 bis etwa 40 ist.

**34.** Pflanzenbehandlungszusammensetzung nach Anspruch 22, wobei die Amin-Tensidkomponente ein oder mehrere Tenside umfasst, von denen jedes bei einem pH von etwa 4 die Formel (II)

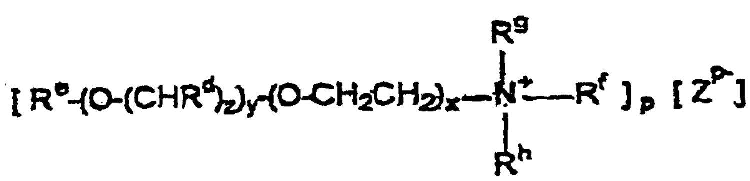

(II)

oder die Formel (III)

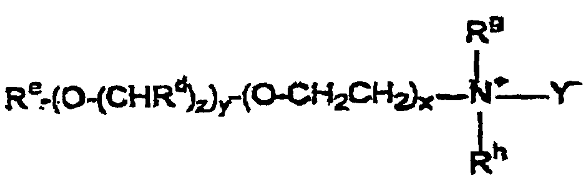

(III)

oder die Formel (IV)

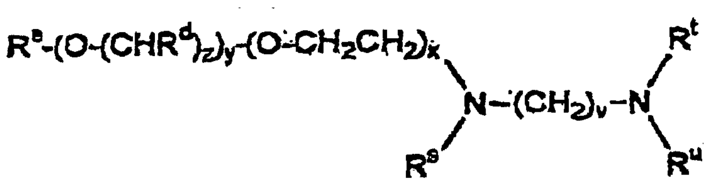

(IV)

ausweist, worin in den Formeln (II), (III) und (IV):

$R^c$ Wasserstoff oder eine lineare oder verzweigte, aliphatische $C_{8-20}$-Hydrocarbylgruppe ist;
jedes z unabhängig 2 oder 3 ist;
jedes $R^d$ Wasserstoff oder Methyl ist, wobei, wenn z 2 ist, mindestens ein $R^d$ in den zwei -($CHR^d$)-Gruppen Methyl ist;
y 0 bis 7 ist, so dass die Gesamtanzahl an Kohlenstoffatomen in der Gruppe $R^e$-(O-($CHR^d$)$_z$)$_y$- 8 bis 24 beträgt;
x 0 bis 5 ist;
$R^f$ Wasserstoff, $C_{1-4}$-Alkyl oder Benzyl ist;
$R^g$ $C_{1-4}$-Alkyl oder -($CH_2CH_2$-O)$_{x'}R^c$ ist und $R^h$ $C_{1-4}$-Alkyl oder -($CH_2CH_2$-O)$_{x''}R^c$ ist, worin $R^c$ Wasserstoff, $C_{1-4}$-Alkyl oder $C_{2-4}$-Acyl ist und x' und x" Durchschnittszahlen sind, so dass x + x' + x" 1 bis etwa 50 ist;
$Z^{p-}$ ein geeignetes Anion ist und p 1 oder 2 ist;
$Y^-$ eine anionische Gruppe ist, gewählt aus -$O^-$, -($CHR^b$)$_w$-$COO^-$ und -($CHR^b$)$_w$-$SO_3^-$, worin w 1 bis 3 ist und jedes $R^b$ unabhängig Wasserstoff, Hydroxyl, $C_{1-4}$-Alkyl oder Hydroxy-($C_{1-4}$-Alkyl) ist;
v eine Zahl von 2 bis 6 ist; und
$R^s$, $R^t$ und $R^u$ unabhängig voneinander $C_{1-4}$-Alkyl oder -($CH_2CH_2$-O)$_k R^c$ ist, worin $R^c$ Wasserstoff, $C_{1-4}$-Alkyl oder $C_{2-4}$-Acyl ist und jedes k eine Durchschnittszahl ist, so dass die Gesamtanzahl an -($CH_2CH_2$-O)-Einheiten in einem Molekül des Amin-Tensids 1 bis etwa 50 beträgt.

**35.** Pflanzenbehandlungszusammensetzung nach Anspruch 34, wobei die Amin-Tensidkomponente ein oder mehrere Tenside der Formel (II) umfasst, gewählt aus Polyoxyethylenalkylaminen, Polyoxyethylenalkyletheraminen, Polyoxyethylen-N-methylalkylammoniumsalzen, Polyoxyethylen-N-methylalkyletherammoniumsalzen und quaternären Polyoxypropylenammoniumsalzen.

**36.** Pflanzenbehandlungszusammenaetzung nach Anspruch 34, wobei die Amin-Tensidkomponente ein oder mehrere Polyoxyethylen (2-20) $C_{12-18}$-alkylamine und/oder Alkylammoniumchoride umfasst.

**37.** Pflanzenbehandlungszusammensetzung nach Anspruch 34, wobei die Amin-Tensidkomponente ein oder mehrere Tenside der Formel (III) umfasst, gewählt aus Polyoxyethylenalkylaminoxiden und Polyoxyethylenalkyletheraminoxiden.

**38.** Pflanzenbehandlungszusammensetzung nach Anspruch 22, wobei das Verhältnis der Alkylether-Tensidkomponente zu der Amin-Tensidkomponente etwa 1:5 bis etwa 5:1, bezogen auf Gewicht, beträgt.

**39.** Pflanzenbehandlungszusammensetzung nach Anspruch 22, wobei das Verhältnis der Alkylether-Tensidkomponente zu der Amin-Tensidkomponente etwa 1:3 bis etwa 3:1, bezogen auf Gewicht, beträgt.

**40.** Pflanzenbehandlungszusammensetzung nach Anspruch 22, wobei das Verhältnis von Tensid zu dem ersten Herbizid, ausgedrückt als Säureäquivalent, etwa 0,1:1 bis etwa 0,4:1, bezogen auf Gewicht, beträgt.

**41.** Verfahren zum Abtöten oder Regulieren des Wachstums einer Pflanze, umfassend das Aufbringen einer Pflanzenbehandlungszusammensetzung gemäß mindestens einem der Ansprüche 22-40 auf das Blattwerk der Pflanze.

**Revendications**

**1.** Composition herbicide concentrée, comprenant :

(a) environ 10 % à environ 90 % en poids exprimé comme équivalent acide, d'un premier herbicide qui est anionique ;

(b) un second herbicide en une quantité efficace pour éliciter un symptôme visible de phytotoxicité dans un végétal environ dans les 4 jours après l'application au feuillage du végétal ;
(c) un composant agent de surface à base d'alkyléther constitué d'un ou plusieurs agent(s) de surface chacun ayant la formule (I)

$$R^{12}\text{-O-}(CH_2CH_2O)_n((CHR)_2O)_m\text{-}R^{13} \quad (I)$$

dans laquelle $R^{12}$ est un groupe hydrocarbyle linéaire, aliphatique, saturé ou insaturé ayant environ 16 à environ 22 atomes de carbone, n est un nombre moyen d'environ 10 à environ 100, m est un nombre moyen de 0 à environ 5, un R dans chaque groupe -($(CHR)_2O$)- représente l'hydrogène et l'autre R représente un méthyle, et $R^{13}$ représente un hydrogène, un groupe alkyle en $C_{1-4}$ ou acyle en $C_{2-4}$ ; et
(d) un composant agent de surface à base d'amine constitué d'un ou plusieurs agent(s) de surface ayant chacun une structure moléculaire qui comprend

(1) une fraction hydrophobe ayant une ou une multitude de groupes indépendamment saturés ou insaturés, ramifiés ou non ramifiés, aliphatiques, alicycliques ou aromatiques hydrocarbyle ou hydrocarbylène en $C_{3-20}$ joints ensemble par 0 à environ 7 liaison(s) éther et ayant au total environ 8 à environ 24 atomes de carbone, et
(2) une fraction hydrophile comprenant un groupe amino qui est cationique ou qui peut être protonné pour devenir cationique, ayant fixé directement dessus 1 à 3 groupe(s) oxyéthylène ou chaîne(s) polyoxyéthylène, ces groupes oxyéthylène et chaînes polyoxyéthylène comprennent une moyenne de 1 à environ 50 motif(s) oxyéthylène par molécule d'agent de surface, la fraction hydrophobe étant fixée soit au groupe amino soit via une liaison éther à un motif oxyéthylène ;

dans laquelle le rapport en poids du composant agent de surface à base d'alkyléther sur le composant agent de surface à base d'amine est environ 1 : 10 à environ 10 : 1 ; et dans laquelle les composants agents de surface à base d'alkyléther et d'amine sont présents au total en une quantité d'adjuvant d'environ 0,05 à environ 0,5 partie en poids par partie en poids du premier herbicide, exprimé comme équivalent acide.

**2.** Composition concentrée selon la revendication 1, qui est liquide et qui comprend environ 10 % à environ 50 % en poids, exprimée comme équivalent acide, du premier herbicide.

**3.** Composition concentrée selon la revendication 1, qui est solide et comprend environ 25 % à environ 75 % en poids, exprimée sous la forme d'équivalent acide, du premier herbicide.

**4.** Composition concentrée selon la revendication 1, dans laquelle le premier herbicide est un herbicide à base de glyphosate.

**5.** Composition concentrée selon la revendication 4, dans laquelle le glyphosate est présent de manière prédominante sous la forme d'un sel soluble dans l'eau ayant un contre-ion cationique de poids moléculaire inférieur à environ 100, ou un mélange de tels sels.

**6.** Composition concentrée selon la revendication 5, dans laquelle le contre-ion cationique est choisi parmi les cations sodium, potassium, ammonium, diméthylammonium, isopropylammonium, monoéthanolammmonium et triméthylsulfonium.

**7.** Composition concentrée selon la revendication 1, dans laquelle le second herbicide est le glufosinate ou sel de celui-ci.

**8.** Composition concentrée selon la revendication 7, dans laquelle le premier herbicide est le glyphosate ou un sel de celui-ci et le rapport en équivalent acide du glufosinate sur le glyphosate est environ 1 : 1 à environ 1 : 30 en poids.

**9.** Composition concentrée selon la revendication 8, dans laquelle le rapport en équivalent acide du glufosinate sur le glyphosate est environ 1 : 2 à environ 1 : 20 en poids.

**10.** Composition concentrée selon la revendication 1, dans laquelle le second herbicide est choisi parmi le carfentrazone-éthyl, le flumiclorac-pentyl, la flumioxazine, le fluoroglycofèn-éthyl, le fomésafène, le lactofène et l'oxyfluorfène.

**11.** Composition concentrée selon la revendication 10, dans laquelle le premier herbicide est le glyphosate ou un sel de celui-ci et le rapport du second herbicide sur le glyphosate, exprimé sous la forme d'équivalent acide, est environ 1 : 1 à environ 1 : 250 en poids.

**12.** Composition concentrée selon la revendication 1 dans laquelle, dans la formule (I) pour le composant agent de surface à base d'alkyléther, $R^{12}$ représente un groupe alkyle, alcényle ou alkadiényle linéaire en $C_{16}$ ou $C_{18}$, ou le composant agent de surface à base d'alkyléther est un mélange d'agents de surface ayant de tels groupes $R^{12}$ variés ou est dérivé d'une huile ou d'une graisse naturelle.

**13.** Composition concentrée selon la revendication 1 dans laquelle, dans la formule (I) pour le composant agent de surface à base d'alkyléther, n est environ 10 à environ 50, m est 0 et $R^{13}$ représente l'hydrogène.

**14.** Composition concentrée selon la revendication 13, dans laquelle, dans la formule (I) pour le composant agent de surface à base d'alkyléther, n est environ 10 à environ 40.

**15.** Composition concentrée selon la revendication 1, dans laquelle le composant agent de surface à base d'amine comprend un ou plusieurs agent(s) de surface chacun ayant, à un pH d'environ 4, la formule (II)

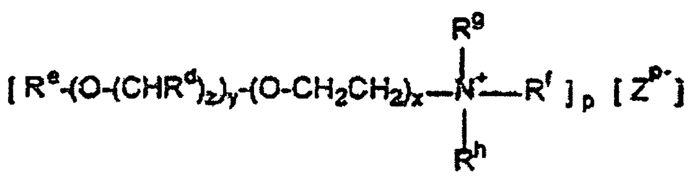

(II)

ou la formule (III)

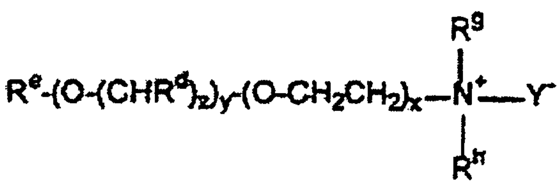

(III)

ou la formule (IV)

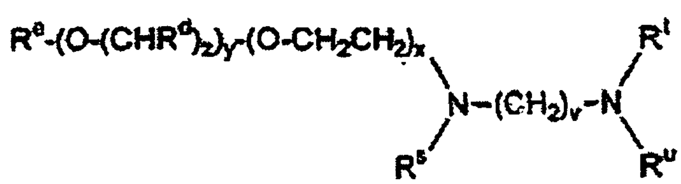

(IV)

où, dans les formules (II), (III) et (IV) :

$R^e$ représente un hydrogène ou un groupe linéaire ou ramifié, aliphatique hydrocarbyle en $C_{8-20}$ ;
chaque z est indépendamment 2 ou 3 ;

chaque $R^d$ représente l'hydrogène ou un méthyle moyennant quoi si z a la valeur de 2 au moins un $R^d$ dans les deux groupes ($CHR^d$)- représente un méthyle ;
y a la valeur de 0 à 7 de sorte que le nombre total d'atomes de carbone dans le groupe $R^e$-(O-($CHR^d$)$_z$)$_y$- soit 8 à 24 ;
x a la valeur de 0 à 5 ;
$R^f$ représente l'hydrogène, un alkyle ou un benzyle en $C_{1-4}$ ;
$R^g$ représente un alkyle en $C_{1-4}$ ou $-(CH_2CH_2-O)_{x'}R^c$ et $R^h$ représente un alkyle en $C_{1-4}$ ou $-(CH_2CH_2-O)_{x''}R^c$, où $R^c$ représente l'hydrogène, un alkyle en $C_{1-4}$ ou un acyle en $C_{2-4}$ et x' et x" sont des nombres moyens de sorte que x + x' + x" soit 1 à environ 50 ;
$Z^{p-}$ représente un anion approprié ; et p a la valeur de 1 ou 2 ;
$Y^-$ représente un groupe anionique choisi parmi $-O^-$, $-(CHR^b)_w-COO^-$ et $-(CHR^b)_w-SO_3^-$ où w est 1 à 3 et chaque $R^b$ représente indépendamment un hydrogène, un hydroxyle, un alkyle en $C_{1-4}$ ou un hydroxyalkyle en $C_{1-4}$ ;
V est un nombre de 2 à 6 ; et
$R^s$, $R^t$ et $R^u$ représentent indépendamment un alkyle en $C_{1-4}$ ou $-(CH_2CH_2-O)_kR^c$ où $R^c$ représente un hydrogène, un alkyle en $C_{1-4}$ ou un acyle en $C_{2-4}$ et chaque k est un nombre moyen tel que le nombre total de motifs $-(CH_2CH_2-O)$ dans une molécule d'agent de surface à base d'amine soit 1 à environ 50.

**16.** Composition concentrée selon la revendication 15, dans laquelle le composant agent de surface à base d'amine comprend un ou plusieurs agent(s) de surface de formule (II) choisi(s) parmi les polyoxyéthylène alkylamines, les polyoxyéthylène alkyétheramines, les sels de polyoxyéthylène N-méthyl alkylammonium, les sels de polyoxyéthylène N-méthyl alkylétherammonium et les sels de polyoxypropylène ammonium quaternaire.

**17.** Composition concentrée selon la revendication 15, dans laquelle le composant agent de surface à base d'amine comprend une ou plusieurs polyoxyéthylène(s) (2-20) alkylamine en $C_{12-18}$ et/ou chlorures d'alkylammonium.

**18.** Composition concentrée selon la revendication 15, dans laquelle le composant agent de surface à base d'amine comprend un ou plusieurs agent(s) de surface de formule (III) choisi(s) parmi les oxydes de polyéthylène alkylamine et les oxydes de polyoxyéthylène alkylétheramine.

**19.** Composition concentrée selon la revendication 1, dans laquelle le rapport du composant agent de surface à base d'alkyéther sur le composant agent de surface à base d'amine est environ 1 : 5 à environ 5 : 1 en poids.

**20.** Composition concentrée selon la revendication 1, dans laquelle le rapport du composant agent de surface à base d'alkyléther sur le composant agent de surface à base d'amine est environ 1 : 3 à environ 3 : 1 en poids.

**21.** Composition concentrée selon la revendication 1, dans laquelle le rapport de l'agent de surface sur le premier herbicide, exprimé sous la forme d'équivalent acide, est environ 0,1 : 1 à environ 0,4 : 1 en poids.

**22.** Composition de traitement de végétaux, comprenant

(a) de l'eau, ayant dissous ou dispersé à l'intérieur
(b) un premier herbicide qui est anionique, en une quantité efficacement herbicide ;
(c) un second herbicide en une quantité efficace pour éliciter un symptôme visible de phytotoxicité au niveau d'un végétal dans les 4 jours environ suivant l'application au feuillage du végétal ;
(d) un composant agent de surface à base d'alkyléther constitué d'un ou plusieurs agent(s) de surface chacun ayant la formule (I)

$$R^{12}\text{-O-}(CH_2CH_2O)_n((CHR)_2O)_m\text{-}R^{13} \quad \text{(I)}$$

dans laquelle $R^{12}$ est un groupe hydrocarbyle linéaire aliphatique, saturé ou insaturé, ayant environ 16 à environ 22 atomes de carbone, n est un nombre moyen d'environ 10 à environ 100, m est un nombre moyen de 0 à environ 5, un R dans chaque groupe $-((CHR)_2O)-$ représente l'hydrogène et l'autre R représente un méthyle, et $R^{13}$ représente un hydrogène, un groupe alkyle en $C_{1-4}$ ou un groupe acyle en $C_{2-4}$ ; et
(e) un composant agent de surface à base d'amine constitué d'un ou plusieurs agent(s) de surface chacun ayant une structure moléculaire qui comprend :

(1) une fraction hydrophobe ayant une ou une multitude de groupes indépendamment saturés ou insaturés, ramifiés ou non ramifiés, aliphatiques, alicycliques ou aromatiques hydrocarbyle ou hydrocarbylène en $C_{3-20}$ joints ensemble par 0 à environ 7 liaison(s) éther et ayant au total environ 8 à environ 24 atomes de carbone, et

(2) une fraction hydrophile comprenant un groupe amino qui est cationique ou qui peut être protonné pour devenir cationique, ayant fixé directement dessus 1 à 3 groupe(s) oxyéthylène ou chaîne(s) polyoxyéthylène, ces groupes oxyéthylène et chaînes polyoxyéthylène comprenant en moyenne 1 à environ 50 motif (s) oxyéthylène par molécule d'agent de surface, la fraction hydrophobe étant fixée soit au groupe amino soit via une liaison éther à un motif oxyéthylène ;

dans laquelle le rapport en poids du composant agent de surface à base d'alkyléther sur le composant agent de surface à base d'amine est environ 1 : 10 à environ 10 : 1 ; et dans laquelle les composants agents de surface à base d'alkyléther et d'amine sont présents au total en une quantité d'adjuvant d'environ 0,05 à environ 0,5 partie en poids par partie en poids du premier herbicide, exprimé comme équivalent acide.

**23.** Composition de traitement de végétaux selon la revendication 22, dans laquelle le premier herbicide est un herbicide à base de glyphosate.

**24.** Composition de traitement de végétaux selon la revendication 23, dans laquelle le glyphosate est présent de manière prédominante sous la forme d'un sel soluble dans l'eau ayant un contre-ion cationique de poids moléculaire inférieur à environ 100, ou un mélange de tels sels.

**25.** Composition de traitement de végétaux selon la revendication 24, dans laquelle le contre-ion cationique est choisi parmi les cations sodium, potassium, ammonium, diméthylammonium, isopropylammonium, monoéthanolammonium et triméthylsulfonium.

**26.** Composition de traitement de végétaux selon la revendication 22, dans laquelle le second herbicide est du glufosinate ou un sel de celui-ci.

**27.** Composition de traitement de végétaux selon la revendication 26, dans laquelle le premier herbicide est du glyphosate ou un sel de celui-ci et le rapport en équivalent acide du glufosinate sur le glyphosate est environ à 1 : 1 à environ 1 : 30 en poids.

**28.** Composition de traitement de végétaux selon la revendication 27 dans laquelle le rapport en équivalent acide du glufosinate sur le glyphosate est environ 1 : 2 à environ 1 : 20 en poids.

**29.** Composition de traitement de végétaux selon la revendication 22, dans laquelle le second herbicide est choisi parmi le carfentrazone-éthyl, le flumiclorac-pentyl, la flumioxazine, le fluoroglycofèn-éthyl, le fomésafène, le lactofène et l'oxyfluorfène.

**30.** Composition de traitement de végétaux selon la revendication 29, dans laquelle le premier herbicide est du glyphosate ou un sel de celui-ci et le rapport du second herbicide sur du glyphosate exprimé sous la forme d'équivalent acide, est environ 1 : 1 à environ 1 : 250 en poids.

**31.** Composition de traitement de végétaux selon la revendication 22 dans laquelle, dans la formule (I) pour le composant agent de surface à base d'alkyléther, $R^{12}$ représente un groupe alkyle, alcényle ou alkadiényle linéaire en $C_{16}$ ou $C_{18}$, ou le composant agent de surface à base d'alkyléther est un mélange d'agents de surface ayant de tels groupes R12 variés ou est dérivé d'une huile ou d'une graisse naturelle.

**32.** Composition de traitement de végétaux selon la revendication 22 dans laquelle, dans la formule (I) pour le composant agent de surface à base l'alkyéther, n est environ 10 à environ 50, m est 0 et $R^{13}$ représente l'hydrogène.

**33.** Composition de traitement de végétaux selon la revendication 32 dans laquelle, dans la formule (I) pour le composant agent de surface à base d'alkyéther, n est environ 10 à environ 40.

**34.** Composition de traitement de végétaux selon la revendication 22, dans laquelle le composant agent de surface à base d'amine comprend un ou plusieurs agent(s) de surface chacun ayant, à un pH d'environ 4, la formule (II)

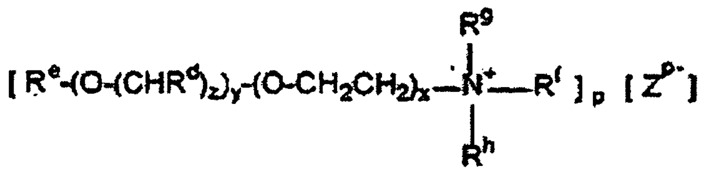

(II)

ou la formule (III)

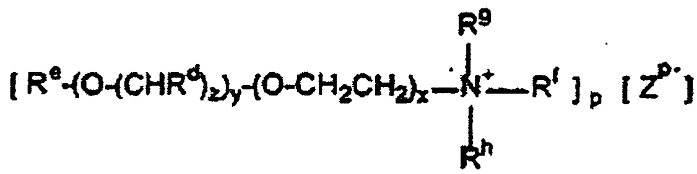

(II)

ou la formule (IV)

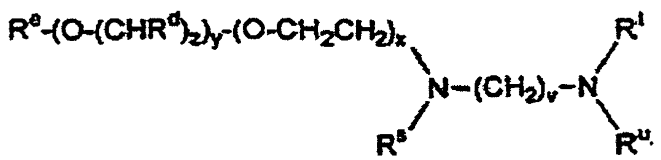

(IV)

où, dans les formules (II), (III) et (IV) :

$R^e$ représente l'hydrogène ou un groupe hydrocarbyle aliphatique en $C_{8-20}$ linéaire ou ramifié ;
chaque z représente indépendamment 2 ou 3 ;
chaque $R^d$ représente l'hydrogène ou un méthyle moyennant quoi si z est 2 au moins un $R^d$ dans les deux groupes -($CHR^d$)- est un méthyle ;
y est 0 à 7 de sorte que le nombre total d'atomes de carbone dans le groupe $R^e$-(O-($CHR^d$)$_z$)$_y$- soit 8 à 24 ;
x est 0 à 5 ;
$R^f$ représente l'hydrogène, un alkyle ou un benzyle en $C_{1-4}$ ;
$R^g$ représente un alkyle en $C_{1-4}$ ou -($CH_2CH_2$-O)$_{x'}R^e$ et $R^h$ représente un alkyle en $C_{1-4}$ ou -($CH_2CH_2$-O)$_{x''}R^e$, où $R^e$ représente un hydrogène, un alkyle en $C_{1-4}$ ou un acyle en $C_{2-4}$ et x' et x" sont des nombres moyens de sorte que x + x' + x" soit 1 à environ 50 ;
$Z^{p-}$ est un anion approprié et p est 1 ou 2 ;
$Y^-$ est un groupe anionique choisi parmi $-O^-$, -($CHR^b$)$_w$-$COO^-$ et - ($CHR^b$)$_w$-$SO_3^-$ où w est 1 à 3 et chaque $R^b$ représente indépendamment un hydrogène, un hydroxyle, un alkyle en $C_{1-4}$ ou un hydroxyalkyle en $C_{1-4}$ ;
v est un nombre de 2 à 6 ; et
$R^s$, $R^t$ et $R^u$ représentent indépendamment un alkyle en $C_{1-4}$ ou - ($CH_2CH_2$-O)$_k R^c$ où $R^c$ représente l'hydrogène, un alkyle en $C_{1-4}$ ou un acyle en $C_{2-4}$ et chaque k est un nombre moyen de sorte que le nombre total de motifs -($CH_2CH_2$-O) dans une molécule d'agent de surface à base d'amine est 1 à environ 50.

**35.** Composition de traitement de végétaux selon la revendication 34, dans laquelle le composant agent de surface à base d'amine comprend un ou plusieurs agent(s) de surface de formule (II) choisi(s) parmi les polyoxyéthylène alkylamines, les polyoxyéthylène alkylétheramines, les sels de polyoxyéthylène N-méthyl alkylammonium, les sels de polyoxyéthylène N-méthyl alkylétherammonium et les sels de polyoxypropylène ammonium quaternaire.

**36.** Composition de traitement de végétaux selon la revendication 34, dans laquelle le composant agent de surface à base d'amine comprend une ou plusieurs polyoxyéthylène (s) (2-20) alkylamine en $C_{12-18}$ et/ou chlorures d'alkylammonium.

**37.** Composition de traitement de végétaux selon la revendication 34, dans laquelle le composant agent de surface à base d'amine comprend un ou plusieurs agent(s) de surface de formule (III) choisi(s) parmi les oxydes de polyoxyéthylène alkylamine et les oxydes de polyoxyéthylène alkylétheramine.

**38.** Composition de traitement de végétaux selon la revendication 22, dans laquelle le rapport du composant agent de surface à base d'alkyléther sur le composant agent de surface à base d'amine est environ 1 : 5 à environ 5 : 1 en poids.

**39.** Composition de traitement de végétaux selon la revendication 22, dans laquelle le rapport du composant agent de surface à base d'alkyléther sur le composant agent de surface à base d'amine est environ 1 : 3 à environ 3 : 1 en poids.

**40.** Composition de traitement de végétaux selon la revendication 22, dans laquelle le rapport de l'agent de surface sur le premier herbicide, exprimé sous la forme d'équivalent acide, est environ 0,1 : 1 à environ 0,4 : 1 en poids.

**41.** Procédé pour tuer ou contrôler la croissance d'un végétal, comprenant l'application d'une composition de traitement de végétaux selon l'une quelconque des revendications 22 à 40 au feuillage d'un végétal.